(19) Europäisches Patentamt

European Patent Office

Office européen des brevets

(11) **EP 4 656 450 A1**

(12) **EUROPEAN PATENT APPLICATION**

(43) Date of publication:
03.12.2025 Bulletin 2025/49

(21) Application number: 25177527.6

(22) Date of filing: 20.05.2025

(51) International Patent Classification (IPC):
**B60L 53/62** (2019.01)    **B60L 53/68** (2019.01)

(52) Cooperative Patent Classification (CPC):
**B60L 53/62; B60L 53/68**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.05.2024 EP 24178466**

(71) Applicant: **HONDA MOTOR CO., LTD.**
**Tokyo 105-8404 (JP)**

(72) Inventors:
• **Limmer, Steffen**
**63073 Offenbach/Main (DE)**
• **Rodemann, Dr. Tobias**
**63073 Offenbach/Main (DE)**

(74) Representative: **Roth, Sebastian**
**Mitscherlich PartmbB**
**Patent- und Rechtsanwälte**
**Karlstraße 7**
**80333 München (DE)**

(54) **AUTOMATED DESIGN OF CHARGING POLICIES FOR ELECTRIC VEHICLE CHARGING**

(57)     The invention concerns methods and systems for controlling charging processes for charging electric vehicles by a charging system based on charging control policies. The methods and systems disclose approaches for automated generating of charging control policies. The system acquires historical information on charging parameters and battery parameters from a database, and determines, for each time step, information on the available total amount of energy for charging the electric vehicles. The system computes, for each time step, and for each charging control policy of a plurality of charging control policies, based on the acquired historical information, a fraction of the total amount of energy for charging the electric vehicles with the charging control policy. The system controls charging the batteries of the electric vehicles for each time step based on the plurality of charging control policies and the computed fraction of the total amount of energy for each charging control policy. Embodiments propose the automated generating of charging control policies using a genetic programming approach.

FIG. 2

EP 4 656 450 A1

**Description**

TECHNICAL FIELD

The invention generally relates to the field of electric vehicles, charging stations, and charging processes for electric vehicles. In particular, the invention presents a charging control system for electric vehicles, a method for controlling charging processes of electric vehicles, and corresponding programs.

BACKGROUND

Sharing of electric vehicles will become more and more important in the near-term and long-term future due to preferential regulatory treatment and widespread public acceptance, but also due to its potential in terms of favorite environmental impact, low maintenance cost, and low operational cost.

Availability of infrastructure for electric vehicles, and in particular, availability of charging stations for charging batteries of the electric vehicles and the long time required for charging the batteries present significant challenges to an early adoption of electric vehicles by potential buyers and users.

The increase in sharing electric vehicles and the expansion of charging infrastructure impose further challenges on an electrical power grid that already has to cope with the integration of significant changes due to the integration of wind power and photovoltaic power generation systems at a local level supplementing or replacing the large power plants using fossil fuels or nuclear power.

A particular issue for the present day energy supply grid (power grid) on a local level, e.g. street level or building level is that the connections at the building or street level are typically not capable to cope with the load arising from charging several electric vehicles with a maximum possible charging power simultaneously.

However, extending the capacity of the power grid is time consuming and requires significant investment in infrastructure. Thus, there exist approaches for coordinated charging of electric vehicles at charging stations close to each other in order to avoid overloading the power grid. For example, charging the electric vehicles of plural users living in a same apartment building may be coordinated by a charging system that includes a plurality of individual charging stations (vehicle charging interfaces). This might result in the batteries of some of the electric vehicles connected to the vehicle charging interfaces of the charging system not being charged as much as desired or as technically possible.

Determining a charging plan for charging a plurality of connected electric vehicles requires answering the question of how to distribute the total available power or energy to the electric vehicles in order to achieve a high overall user satisfaction and to treat the users of the electric vehicles in a fair way. A popular approach for controlling charging of electric vehicles includes computing charging plans based on mixed integer linear programming (MILP).

Determining charging plans based on procedures using MILP requires knowledge of personal movement data of the users of the electric vehicles, e.g., departure times of the users and energy requirements of the electric vehicles. Requiring information from the users increases requirements for infrastructure, e.g., providing a user terminal or user interface to enter the required information. Even more, some users, who have to provide the information before each charging process might not be willing, not able or generally annoyed by providing the required information. Often it might also prove challenging to users to provide accurate information about a future departure time or a target state of charge (SOC) required for their electric vehicle.

Alternatively, controlling the charging of electric vehicles without a priori knowledge of the charging requirements, based on a rule-based control using simple charging control policies is a popular approach. Compared to optimization-based control, rule-based control has the advantage of being less computationally demanding and thus causing less cost. An example for rule-based charging control may include equally distributing the total available energy to the electric vehicles connected with the charging system. However, the rule-based approaches are often less advantageous in terms of power management and size of the power grid interface, and the batteries of some of the electric vehicles connected to the vehicle charging interfaces of the charging system are not charged as much as desired or as technically possible, while the batteries of other electric vehicles have an unnecessary large SOC.

SUMMARY

It is therefore an object to improve the existing charging control processes for charging systems with plural charging interfaces for electric vehicles in order to overcome the discussed disadvantages.

The method for controlling charging processes for electric vehicles by a charging system according to independent claim 1, the program, the recording medium storing the program and the charging control system according to the corresponding independent claims provide an advantageous solution achieving the object.

The dependent claims define advantageous embodiments.

A first aspect concerns a method for controlling charging processes for charging electric vehicles by a charging system, wherein the charging system performs charging batteries of the electric vehicles based on at least one charging control policy. The method comprises: determining information on the available total amount of energy for charging the batteries of the electric vehicles for each time step; computing, for each time step a fraction of the total amount of energy for charging the batteries of the electric vehicles; and controlling charging, during each time step, the batteries of the electric vehicles based on the at least one charging control policy and the computed fraction of the total amount of energy.

The method according to the first aspect is in particular a computer-implemented method.

A charging policy can be considered a model or an algorithm that computes in each time step the energies allocated to electric vehicles connected to the charging system taking into account the current state of the system, in particular the state of the system that includes the electric vehicles connected with the charging system.

The method proposes a framework for an automated design of charging control policies for charging of electric vehicles. The automated design of charging control policies provides a control of charging processes for electric vehicles that will result in a high degree of user satisfaction with the charging by the charging system, which current approaches often fail to deliver.

According to an exemplary embodiment, the method, comprises computing, for each time step, for each of the electric vehicles, a priority score based on the features of the electric vehicles using a formula determined by genetic programming, and determining the fraction of the total amount of energy for charging the batteries of the electric vehicles for each time step and for each of the electric vehicles based on the computed priority scores.

Using genetic programming for determining the formula for determining the priority score, e.g. based on historic data enables to adapt computing the priority score using the formula to the specific charging system and its use based on training data. The formula for computing the priority score is evolved with the genetic programming approach.

In the method according to an exemplary embodiment, the features of the electric vehicles include at least one of an energy capacity of the battery of each of the electric vehicles, an energy level of each of the vehicles, a state-of-charge of the battery of each of the electric vehicles, an arrival time step (arrival time interval) of each of the electric vehicles, a maximum charging power of each of the electric vehicles, a state of charge at the arrival of each of the electric vehicles, and a charged-energy-since-arrival divided by a number-of-time-intervals-since-arrival (number-of-time-steps-since-arrival) of each of the electric vehicles.

This embodiment distributes the available energy using the computed priority score for each vehicle and each time step, wherein the priority score bases on easily available information on the electric vehicles intended for charging by the charging system.

In an exemplary embodiment, the method comprises acquiring historical information on charging parameters and battery parameters from a database, and determining the formula by applying a genetic programming algorithm on the acquired historical information in a training phase.

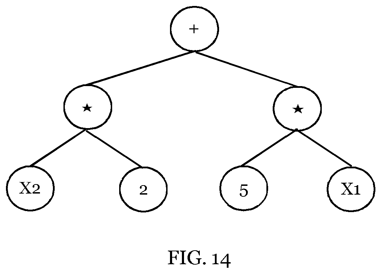

A genetic programming algorithm, or genetic programming model (GP model) comprises a combination of variables, constants and operators. The sets of variables and operators of the GP model, which can be combined are predefined, while constants could be either predefined or evolved by the approach using the genetic programming algorithm. Commonly, GP models are represented internally as trees. For example, the expression $5*X1 + 2*X2$, where $X1$ and $X2$ are variables, could be represented as the tree shown in Fig. 14.

Using genetic programming for determining the formula for determining the priority score, e.g. based on historic data and in a training phase enables to adapt computing the priority score using the formula to the specific charging system and its use based on training data in the field. Re-training for determining an adapted formula ensures that the charging system is able to cope with changing conditions over a long time of usage of the charging system.

In the method according to an exemplary embodiment, the step of determining the formula by the genetic programming includes a step of selecting from candidate formulas for further processing based on a predefined fitness measure, wherein the fitness measure comprises at least one of a mean additional charging time of the electric vehicles and a maximum additional charging time for the electric vehicles.

Fitness measures (or objectives) comprise at least one of a mean additional charging time of the electric vehicles and a maximum additional charging time for the electric vehicles and yield a control of the charging system that achieves high satisfaction with its users, as the time and effort required for an external charging of the electric vehicles decrease.

The method according to an exemplary embodiment includes controlling charging the batteries of the electric vehicles that comprises prioritizing at least a first electric vehicle of the electric vehicles over at least one second electric vehicle of the electric vehicles based on the computed priority score.

The priority score determined via the formula provides for a simple and efficient prioritizing when charging the electric vehicles with electric energy under the given constraints.

In an exemplary embodiment of the method, the charging system performs charging the batteries of the electric vehicles based on a plurality of charging control policies. The method further comprises acquiring historical information on charging parameters and battery parameters from a database, computing, for each time step, and for each charging control policy of the plurality of charging control policies, based on the historical information, the fraction of the total amount of energy for charging the batteries of the electric vehicles with the charging control policy. The method then controls charging, simultaneously, during each time step, the batteries of the electric based on a combination of the plurality of charging control policies and the computed fraction of energy for each charging control policy.

Rule-based charging control based on simple charging control policies (basic charging control policies) proved a practical approach for distributing a limited amount of energy or power to electric vehicles of multiple users. Depending on the behavior and characteristics of the users, different efficiencies in terms of overall user satisfaction are achievable with different charging control policies. Comparing the different rule-based charging control policies with respect to their efficiency and fairness, the method of the exemplary embodiment proposes a combination of multiple charging control policies for charging the batteries of electric vehicles simultaneously in a time step in order to achieve a higher efficiency and fairness compared to the single charging control policy of the known approaches. For the parameterization of the combined charging control policy, a multi-objective evolutionary optimization on the historical information may be used. An evaluation, e.g., based on a simulation, shows that the approach of the method according to the exemplary embodiment outperforms using single charging control policies, especially in terms of fairness for the users of the electric vehicles. Due to the improved fairness, a high acceptance of the proposed method to a plurality of users may be expected.

A critical challenge for each charging system addressing the charging demands from a community of users is to decide how available energy is to be distributed. It appears unlikely that all users would agree on the same charging control policy, so multiple charging strategies are going to be discussed. The specific preferences of a single user could be the result of a purely rational analysis, e.g., the user returning home early might prefer a first-come-first-served policy, but could also be derived from more general ethical principles like equality of the users. Instead of trying to agree on one charging strategy, the method according to the exemplary embodiment divides the available energy budget of the charging system into plural shares. The method then distributes the plural shares of the total available energy budget via different charging control policies to the electric vehicles connected with the charging system during one time step. This approach automatically creates room for compromises between the users, without requiring a prolonged negotiation between the users of the electric vehicles, which will increase the overall acceptance of the charging system further.

In the method according to an embodiment, a sum of the computed fractions of the total amount of energy corresponds to the total amount of energy.

The method according to an embodiment includes computing the fractions by optimizing the fractions based on minimizing a mean additional charging time of the electric vehicles, and minimizing a maximum additional charging time $\hat{A}$ for all electric vehicles.

The method of an embodiment comprises a step of optimizing the fractions based on the acquired historical information for a predetermined period-of-time.

Thus, based on training data obtained for the predetermined period-of-time, an optimization of the fractions of the total available energy budget, and the respective distribution by the individual charging control policies is learned. The computed fractions of the available total amount of energy will therefore provide a distribution of the limited energy budget on the electric vehicles of the users, which provides an acceptable compromise, as long as the training data is sufficiently representative, e.g. the predetermined time long enough.

A typical value for the predetermined period-of-time may be 100 days.

According to an embodiment, the method comprises optimizing the fractions by performing a multi-objective optimization including the objectives (objective functions)

$$f1 = \min_{w_{chp_k}, k=1,...K} \bar{A},$$

and

$$f2 = \min_{w_{chp_k}, k=1,...K} \hat{A},$$

with $\bar{A}$ representing a mean additional charging time over all electric vehicles, $\hat{A}$ representing the maximum additional charging time over all electric vehicles, a number of K charging control policies $chp_k$, and $w_{chpk}$ representing the weight of the charging control policy $chp_k$. The method then performs a step of selecting a solution from a Pareto set resulting from the optimization. Additional charging time is the time it requires to charge the unsatisfied charging demand.

The method uses an evolutionary optimization to compute an optimal weighting of the individual charging control policies of the combination of charging control policies. Optimality in this context is defined as a good compromise between a good average performance, e.g., an average additional external charging time interval, and a worst-case performance, e.g., an additional external charging time interval of the user with the worst situation.

Alternatively, other indicators of fairness of the distribution of the available energy could be used, e.g., minimizing a spread between a worst-of and a best-of user of an electric vehicle.

The method according to an embodiment includes a step of obtaining, from charging equipment of the charging system, information on charging characteristics and battery characteristics of the electric vehicles for generating the historic information on charging and battery parameters, and storing the obtained information in the database.

In an embodiment, the method includes acquiring, from the electric vehicles, information on charging characteristics and battery characteristics of the electric vehicles for generating the historic information on charging parameters and battery parameters, and storing the acquired information in the database.

The method according to an embodiment includes acquiring from users of the electric vehicles, via a user interface, information on usage of the electric vehicles for generating the historic information on charging parameters and battery parameters, and storing the acquired information in the database.

According to an embodiment of the method, the plurality of charging control policies includes different charging control policies from at least an equal distribution policy, a first-come-first-served policy, a less-energy-first policy, a lower-state-of-charge-first policy, a less-charged-first policy.

In the second aspect, a computer program comprises instructions, which, when the program is executed by a computer, cause the computer to carry out the method of any embodiment of the first aspect.

The third aspect concerns a computer-readable medium having stored thereon the computer program of the second aspect.

The charging control system according to the fourth aspect controls a charging system, wherein the charging system is configured to perform charging batteries of the electric vehicles based on at least one charging control policy. The charging control system comprises a control circuit configured to determine information on the available total amount of energy for each time step for charging the batteries the electric vehicles, and to compute, for each time step, a fraction of the total amount of energy for charging the batteries of the electric vehicles. The control circuit is further configured to generate a signal for charging the batteries of the electric vehicles with electric energy based on the at least one charging control policy and the computed fraction of the total amount of energy, and to output the generated control signal via a charging control interface of the control circuit to charging equipment of a charging system.

The charging control system of the fourth aspect and its embodiments achieves corresponding advantageous effects as the method for controlling charging processes for electric vehicles by a charging system according to the first aspect.

In an exemplary embodiment of the charging control system, the control circuit is further configured to compute, for each time step, for each of the electric vehicles, a priority score based on features of the electric vehicles using a formula determined by genetic programming. The control circuit is further configured to determine the fraction of the total amount of energy for charging the batteries of the electric vehicles for each time step and for each of the electric based on the computed priority scores.

The charging control system according to an exemplary embodiment performs charging the batteries of the electric vehicles based on a plurality of charging control policies. The charging control system comprises a data interface configured to acquire historical information on charging and battery parameters of the electric vehicles from a database; and a memory for storing the database. The control circuit is further configured to compute, for each time step, and for each charging control policy of the plurality of charging control policies, based on the historical information, the fraction of the total amount of energy for charging the batteries of the electric vehicles with the charging control policy. The control circuit is further configured to generate the control signal for controlling simultaneously charging, during each time step, the batteries of the electric vehicles with electric energy based on a combination of the plurality of charging control policies and the computed fraction of the total amount of energy for each charging control policy.

BRIEF DESCRIPTION OF THE DRAWINGS

The following description of embodiments refers to the figures, in which

Fig. 1 displays a simplified block diagram of a charging system of an exemplary embodiment;

Fig. 2 provides a flowchart providing an overview over a charging control method according to an exemplary embodiment;

Fig. 3 provides a table that presents basic electric characteristics for different models of electric vehicles used in a simulation scenario;

Fig. 4A illustrates distributions of mean additional external charging time intervals per day $\overline{A}$ with different basic charging control policies generated with training data in a simulated scenario;

Fig. 4B illustrates distributions of maximum additional external charging time intervals per day $\hat{A}$ with different basic charging control policies generated using training data in a simulated scenario;

Fig. 5 illustrates an approximation of a Pareto front and results of the basic charging control policies generated based on training data in a simulated scenario;

Fig. 6A depicts weights yielding the best mean additional external charging time intervals per day $\overline{A}$ generated with training data;

Fig. 6B depicts weights yielding the best maximum additional external charging time intervals per day $\hat{A}$ generated with training data;

Fig. 7A illustrates distributions of mean additional external charging time intervals per day $\overline{A}$ with different basic charging control policies generated with test data;

Fig. 7B illustrates distributions of maximum additional external charging time intervals per day $\hat{A}$ with different basic charging control policies generated using test data;

Fig. 8 provides a flowchart providing an overview over a charging control method according to an exemplary embodiment;

Fig. 9 illustrates the processing in a charging control method according to an exemplary embodiment.

Fig. 10 shows a comparison for experimental results on training data for different embodiments compared with basic charging control policies;

Fig. 11 displays shows a comparison for experimental results on training data for different embodiments compared with basic charging control policies;

Fig. 12 shows a comparison for experimental results for the mean additional charging time for different embodiments compared with basic charging control policies;

Fig. 13 displays a comparison for experimental results for the maximum additional charging times for different embodiments compared with basic charging control policies; and

Fig. 14 illustrates a simple tree structure representing a genetic programming model.

In the figures, corresponding elements have the same reference signs. The discussion of the figures avoids discussion of same reference signs in different figures wherever considered possible without adversely affecting comprehensibility and avoiding unnecessary repetitions for sake of conciseness.

DETAILED DESCRIPTION OF EMBODIMENTS

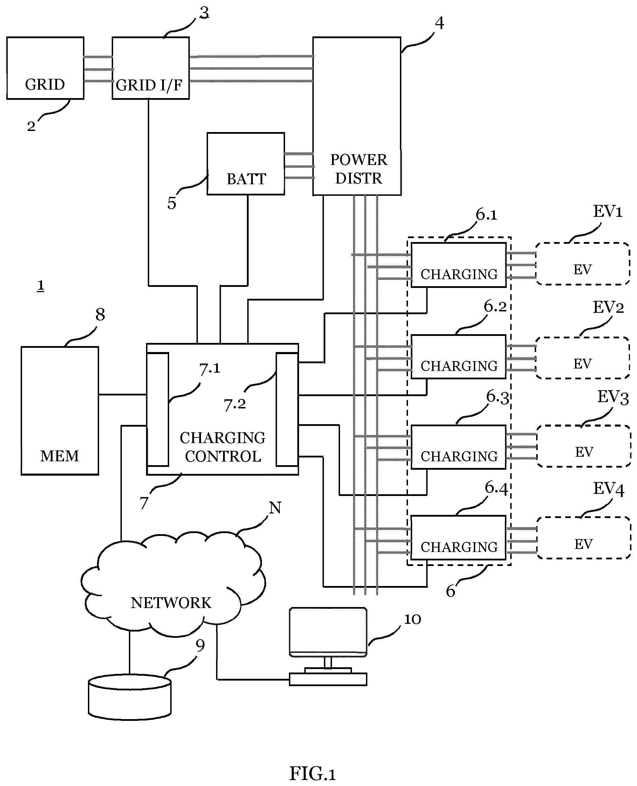

Fig. 1 displays a simplified block diagram illustrating the basic architecture and major components of a charging system 1.

The charging system 1 may be installed in an apartment building with a shared parking garage for the electric vehicles EV1, EV2, EV3, EV4 of the inhabitants of the building.

Alternatively, the building may be an office building or a factory with an associated car park.

Each electric vehicle EV1, EV2, EV3, EV4 has its own charging interface 6.1, 6.2, 6.3, 6.4 associated with the electric vehicle EV1, EV2, EV3, EV4. The users are not willing to charge their electric vehicles EV1, EV2, EV3, EV4 externally, they prefer charging their electric vehicles using their respective vehicle-charging interface 6.1, 6.2, 6.3, 6.4 of the charging system 1.

The charging system 1 may be installed in a local community including a plurality of users n, which share a power grid interface 3 with the energy supply grid 2 for charging their electric vehicles EV1, EV2, EV3, EV4, with a financial interest to maintain the power level of the power grid interface 3 as low as possible. A coordinated charging plan for all electric vehicles EV1, EV2, EV3, EV4 can provide a good level of satisfaction for most users on average but might occasionally not deliver the requested energy for the individual users and their respective electric vehicles EV1, EV2, EV3, EV4.

Alternatively, the charging system 1 may be distributed over plural sites, and a communication network N. may connect elements of the charging system 1 at different sites.

The embodiment measures the resulting user dissatisfaction based on a time required for charging the electric vehicle EV1, EV2, EV3, EV4 externally if not enough energy was provided by the charging system 1. Thus, discomfort is expressed as lost time, which proves computationally efficient to interpret effects of the charging system 1, other than, for example, missing energy in the batteries of the electric vehicles EV1, EV2, EV3, EV4 of the users.

Other measures of dissatisfaction of the users could be considered, for example measures determined based on studies with real users.

The charging control system 1 includes the charging control system of an embodiment. The charging control system controls the charging system 1, in particular controls the times when to charge an electric vehicle EV1, EV2, EV3, EV4 connected to a respective vehicle charging interface 6.1, 6.2, 6.3, 6.4 of the charging system 1. The charging control system controls a charging current of the vehicle charging interfaces 6.1, 6.2, 6.3, 6.4 for charging the battery of each connected electric vehicle EV1, EV2, EV3, EV4, thereby controlling the charging power and the transferred amount of electric energy of the charging process (charging session).

The charging system 1 is configured to perform charging the batteries of the electric vehicles EV1, EV2, EV3, EV4 based on a plurality of different charging control policies. The charging control policies include basic charging control policies.

The charging control system, e.g. implemented using a control circuit 7 of the charging system 1, comprises a data interface 7.1 configured to acquire historical information on charging parameters and battery parameters for the electric vehicles EV1, EV2, EV3, EV4 from a database.

The charging system 1 comprises a memory 8 for storing the database. The memory storing the database may be the memory 8 associated with the control circuit 7, or a memory forming part of the control circuit 7 of the charging system 1.

The data storage storing the database may be located remote from the control circuit 7, e.g. implemented by a server 9 connected via a communication network N with the charging system 1.

The charging system 1 of fig. 1 includes a computer 10 for implementing a human machine interface (HMI) for inputting data to the charging control system, e.g. information input by the users of the electric vehicles EV1, EV2, EV3, EV4.

The charging control system may include a plurality of computers 10, smartphones, personal digital assistants or similar electronic devices running a software for implementing the functions of the computer 10, in particular the HMI for interacting with the users of the electric vehicles EV1, EV2, EV3, EV4.

The charging control system comprises the control circuit 7 configured to determine information on the available total amount of energy for charging the batteries the electric vehicles EV1, EV2, EV3, EV4 for each time step. In the following description, the expressions time step and time interval are used interchangeably, and denote a time interval of a predetermined length, e.g., of a half an hour. The control circuit 7 further computes, for each time step, and for each charging control policy of the plurality of charging control policies, based on the historical information, a fraction of the determined total amount of energy for charging the batteries of the electric vehicles EV1, EV2, EV3, EV4 with the charging control policy of the plurality of charging control policies.

The control circuit 7 is further configured to control charging equipment 6 of the charging system 1, by outputting a control signal via a charging control interface, to charge, during each time step, the batteries of the electric vehicles EV1, EV2, EV3, EV4 with electric energy based on the plurality of charging control policies and the computed fraction of the total amount of energy for each charging control policy.

The control circuit 7 includes a data interface 7.1 and a charging control interface 7.2.

The control circuit 7 acquires via the data interface 7.1, historical information on the charging parameters and the battery parameters of the electric vehicles EV1, EV2, EV3, EV4 from the database.

The historical information includes information on the charging parameters and the battery parameters for a predetermined period of time, e.g., for 100 days for the n electric vehicles EV1, EV2, EV3, EV4 of the users.

The charging parameters may include arrival times and departure times of the electric vehicle EV1, EV2, EV3, EV4 for the days during the predetermined period of time. The charging parameters may include a state of charge SOC of the battery on arrival of the electric vehicle EV1, EV2, EV3, EV4 of a user n. The charging parameters may include an energy consumption of the electric vehicle EV1, EV2, EV3, EV4 of a user n per day d.

The battery parameters may include a maximum charging power $P^{max}$ for charging the battery of the electric vehicle EV1, EV2, EV3, EV4, and a maximum battery capacity $C_n$ of the battery of the electric vehicle EV1, EV2, EV3, EV4 of a user n.

The control circuit 7 outputs, via the charging control interface 7.2, a control signal to control the charging equipment 6 that controls charging, during each time step, the batteries of the electric vehicles EV1, EV2, EV3, EV4 with electric energy based on the plurality of charging control policies and the computed fraction of the total amount of energy for each basic charging control policy.

The charging equipment 6 includes plural vehicle-charging interfaces 6.1, 6.2, 6.3, 6.4. Each vehicle-charging interface 6.1, 6.2, 6.3, 6.4 is configured to electrically connect an electric vehicle EV1, EV2, EV3, EV4. Each vehicle-charging interface 6.1, 6.2, 6.3, 6.4 provides electric energy via a wired or a wireless connection to the connected electric vehicle EV1, EV2, EV3, EV4 based on the control signal(s) generated and output by the control circuit 7 of the charging system 1.

Each vehicle-charging interface 6.1, 6.2, 6.3, 6.4 of the embodiment of fig. 1 also provides a data link not explicitly shown in fig. 1 between the charging system 1 and the respective electric vehicle EV1, EV2, EV3, EV4. The control circuit 7 may acquire information, e.g. information on energy consumption stored in a log data storage of the electric vehicle EV1, EV2, EV3, EV4, from the electric vehicle EV1, EV2, EV3, EV4 via the data link.

The charging system 1 of fig. 1 includes a power distributor 4, which obtains electrical energy from the energy supply grid 2 via the power grid interface 3. The power distributor 4 may also acquire electrical energy from other energy sources, e.g. electrical energy from a local energy storage, e.g., a stationary battery 5.

The power distributor 4 communicates the amount of the available electrical energy via a status signal to the control circuit 7. In particular, the power distributor 4 provides in the status signal information on the available total amount of energy for each time step, e.g. for each time step of a prediction horizon including a predetermined number of time steps, to the control circuit 7.

The total amount of available electrical energy includes energy obtained via the power grid interface 3 from the energy supply grid 2. The amount of available electrical energy may include further amounts of electrical energy from other energy sources, e.g., the amount of energy stored in the local energy storage.

Additionally or alternatively, the power grid interface 3 and the energy storage communicate information on the available electrical energy directly to the control circuit 7. The control circuit 7 determines the available total amount of energy for each time step based on the acquired information from at least one of the power grid interface 3, energy distributor 4, and local energy storage.

The power distributor 4 distributes the acquired available electrical energy to the vehicle charging interfaces 6.1, 6.2, 6.3, 6.4 based on the control signal generated and output by the control circuit 7, and based on the plurality of charging control policies.

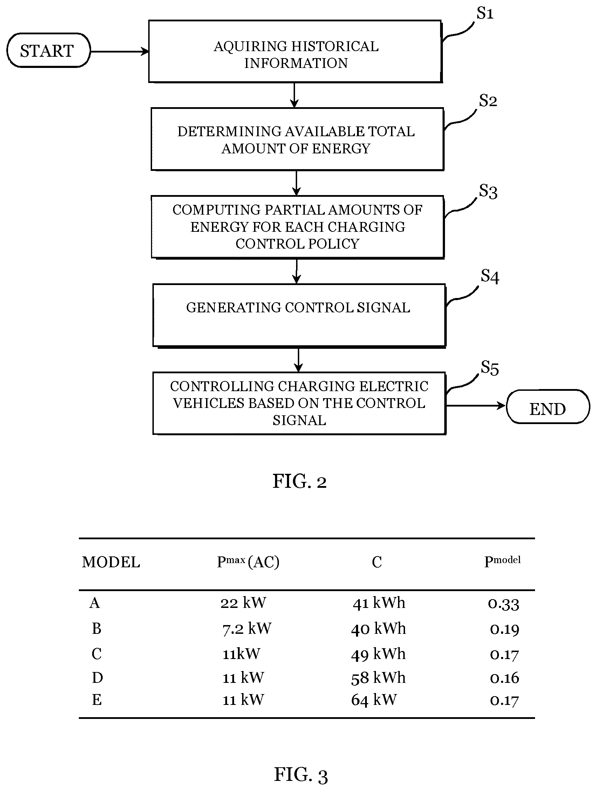

Fig. 2 provides a flowchart providing an overview over a charging control method according to an embodiment.

The method for controlling charging processes for charging electric vehicles by the charging system 1 as discussed with reference to fig. 1. The charging system 1 performs charging the batteries of the electric vehicles EV1, EV2, EV3, EV4 based on the plurality of charging control policies.

The embodiment presents a plurality of charging control policies that includes five different charging control policies. However, the method and the corresponding system are not limited to five different control policies, embodiments with less than five different charging control policies and embodiments with more than five charging control policies, e.g., eight different charging control policies included in the plurality of basic charging control policies are equally possible.

The different charging control policies may include, e.g., an equal distribution charging control policy (ED charging control policy). In the ED charging control policy, in each time step, the available total power (energy) is distributed as equally as possible, e.g., in amounts of energy of equal size, to the electric vehicles EV1, EV2, EV3, EV4 connected via the vehicle charging interfaces 6.1, 6.2, 6.3, 6.4 with the charging system 1.

In the first-come-first-served charging control policy (FCFS charging control policy), electric vehicles EV1, EV2, EV3, EV4 with an earlier arrival time are charged preferentially in relation to electric vehicles EV1, EV2, EV3, EV4 with a later arrival time as follows: from the available power, as much as possible is allocated to the charging of the electric vehicles EV1, EV2, EV3, EV4 that were connected first with the charging equipment 6 of the charging system 1. From the remaining power, as much as possible is allocated to electric vehicles EV1, EV2, EV3, EV4 that were connected second to the charging equipment 6 of the charging system 1. Thereafter, the remaining electric power is allocated to the electric vehicles EV1, EV2, EV3, EV4 that arrived third, e.g. after the first and second electric vehicles EV1, EV2, EV3, EV4 and were connected to the charging equipment 6 of the charging system 1.

In the less-energy-first-served charging control policy (LEF charging control policy), electric vehicles EV1, EV2, EV3, EV4 with a lower SOC of the battery (lower battery level) are preferred over electric vehicles EV1, EV2, EV3, EV4 with a higher SOC battery level in an analogous manner to the FCFS charging control policy discussed before.

In the lower-state of charge-first charging control policy (LS charging control policy), electric vehicles EV1, EV2, EV3, EV4 with a lower SOC are preferentially charged with regard to electric vehicles EV1, EV2, EV3, EV4 with a higher SOC in an analogous manner to the FCFS charging control policy discussed before.

In a less charged-first charging control policy (LCS charging control policy), electric vehicles EV1, EV2, EV3, EV4 with a lower amount of energy charged since their last arrival are charged preferentially with respect to electric vehicles EV1, EV2, EV3, EV4 with a higher amount of charged energy analogously to the FCFS charging control policy.

Since the behaviors of the users and the characteristics of the electric vehicles EV1, EV2, EV3, EV4 vary among the users and electric vehicles EV1, EV2, EV3, EV4, different users benefit to a different extent from different charging control policies $chp_k$. For example, a first user benefits most from equally distributing the available energy according to the ED charging control policy, other users including a second user benefit more from a first-come first-served distribution of the available charging power, according to the FCFS charging control policy.

Analogously, it depends on the characteristics of a single user, which charging control policy results in the best performance over the whole group of users. Thus, there exists no single charging control policy, which provides the best results in all situations, which might occur.

The method starts with a step S1 of acquiring historical information on charging parameters and battery parameters of the electric vehicles EV1, EV2, EV3, EV4 from a database.

The method then determines in step S2, information on the available total amount of energy for charging the batteries the electric vehicles EV1, EV2, EV3, EV4 for each time step.

In step S3, the method computing, for each time step, and for each charging control policy of the plurality of charging control policies, based on the historical information, a partial amount of energy for charging the batteries of the electric vehicles EV1, EV2, EV3, EV4 with the charging control policy of the plurality of charging control policies as a weighted fraction of the total amount of energy. The computation is repeated when the fractions shall be updated. This can be manually triggered by an operator, or automatically be performed after a predefined time interval elapsed when the last computation was done. A reasonable time interval is 100 days. Advantageously, the predefined time interval can be adjusted by the operator. The fractions resulting from the calculation are then fixed until the next computation is performed.

The method then proceeds to step S4 and generates, in step S4, a control signal for controlling charging, during each time step, the batteries of the electric vehicles EV1, EV2, EV3, EV4 based on the plurality of charging control policies and the computed partial amount of energy for each charging control policy. The control circuit 7 outputs the generated control signal to the vehicle charging equipment 6, in particular the vehicle charging interfaces 6.1, 6.2, 6.3, 6.4 via the vehicle charging interface 7.2.

The control circuit 7 may output the generated control signal to the power distributor 4.

In step S5, the vehicle charging equipment 6 charges, during each time step, the batteries of the electric vehicles EV1, EV2, EV3, EV4 with electric energy based on the control signal, in particular based on the plurality of charging control policies and the computed partial amount of energy for each charging control policy.

The following detailed description of the embodiment of the method assumes a scenario of the electric vehicle charging system (charging system 1) for N electric vehicles EV1, EV2, EV3, EV4.

The N electric vehicles correspond to N users.

The scenario assumes a number of D days, and each day, a time horizon of T time steps of a length $\Delta t$. At each day d, a user n initiates a charging session in the corresponding time horizon with a respective arrival time step $t_{n,d}^A$ and a respective departure time step $t_{n,d}^D$. The battery charging level (charging level) on arrival of the electric vehicle is $B_{n,d}^A$. In each time step t, with $t_{n,d}^A \leq t \leq t_{n,d}^D$, of a charging session of the electric vehicle of the user n, the electric vehicle of the user n is charged with a charging power $P_{n,d,t} \leq P_{n,d,t}^{max}$, wherein $P_{n,d,t}^{max}$ denotes a maximum charging power of the electric vehicle of the user n. After the times step t has elapsed, a battery level $B_{n,d,t}$ of the electric vehicle of the user n is

$$B_{n,d,t} = \begin{cases} min\{C_n, B_{n,d}^A + \Delta t \cdot P_{n,d,t}\} \, t = t_{n,d}^A \\ min\{C_n, B_{n,d,t-1} + \Delta t \cdot P_{n,d,t}\} \, else \end{cases} \tag{1}$$

In expression (1), $C_n$ is a battery capacity of the electric vehicle of the user n. The battery level $B_{n,d,t_{n,d}^D}$ after the time step $t_{n,d}^D$ is the departure battery level $B_{n,d}^D$ of the electric vehicle EV1, EV2, EV3, EV4 of the user n on day d.

After charging their electric vehicle on a day d, the user n drives a certain range and consumes a certain amount $E_{n,d}^D$ of electric energy before returning for charging the battery of the electric vehicle EV1, EV2, EV3, EV4 on the following day d+1.

It is assumed, that each user intends to maintain the battery of the electric vehicle EV1, EV2, EV3, EV4 at a charging level (state of charge - SOC) that exceeds a predetermined minimum SOC $S^{min} \in [0; 1]$ and that each user recharges his electric vehicle EV1, EV2, EV3, EV4 externally, at a vehicle charging station not forming part of the charging system 1 in order to prevent the SOC of the battery of the electric vehicle EV1, EV2, EV3, EV4 from falling below the minimum charging level $S^{min}$. Thus, the battery level on arrival of the electric vehicle EV1, EV2, EV3, EV4 of the user n on day d except the first day, and denoted $B_{n,d}^A$, is according to expression (2)

$$B_{n,d}^A = max\{B_{n,d-1}^D - E_{n,d-1}, S^{min} \cdot C_n\} \tag{2}$$

The user n may recharge the electric vehicle EV1, EV2, EV3, EV4 with a respective maximum charging power externally. Hence, a user n spends a time of

$$O_n = \frac{1}{D} \sum_{d=1}^{D} \frac{\sum_{d=1}^{D} \max\{0, S^{min} \cdot C_n + E_{n,d} - B_{n,d}^D\}}{P_n^{max}} \qquad (3)$$

hours per day for charging the battery of the electric vehicle EV1, EV2, EV3, EV4 externally at a charging station (vehicle charging station) not forming part of the charging system 1.

Due to limited power capacity of the power grid interface 3 of the charging system 1, a total charging power of the charging system 1 is limited to a certain value of the total charging power limit $P^{lim}$. Increasing the total charging power limit $P^{lim}$ may require hardware upgrades with corresponding cost. Increasing the total charging power limit $P^{lim}$ may also require paying increased peak demand fees to a power supplier. Consequentially, there may exist time steps during which not all electric vehicles EV1, EV2, EV3, EV4 connected to a vehicle charging interface 6.1, 6.2, 6.3, 6.4 of the charging system 1 (connected electric vehicles EV1, EV2, EV3, EV4) can be charged with the possible maximum charging power of the respective electric vehicle EV1, EV2, EV3, EV4.

A certain charging control policy $chp_k$ controls the distribution of the available electric energy to the connected electric vehicles EV1, EV2, EV3, EV4.

Due to the electric vehicles EV1, EV2, EV3, EV4 not always been charged with their respective possible maximum charging power of the electric vehicle EV1, EV2, EV3, EV4 of the user n may result in a dissatisfaction of the user n. If the suffix *uctl* denotes an uncontrolled charging process that is not restricted to the possible maximum charging power of the electric vehicle of the user n, and $O_n^{chp}$ denotes a time interval that the user n spends on external charging in case the charging of the electric vehicle EV1, EV2, EV3, EV4 of the user n is performed according to the charging control policy $chp_k$, a dissatisfaction $A_n$ of the user n with the charging control policy $chp_k$ may be expressed as the additional time interval that the user spends on externally charging the battery of the electric vehicle EV1, EV2, EV3, EV4 compared to the time interval of uncontrolled charging

$$A_n = O_n^{chp} - O_n^{uctl} \qquad (4)$$

with an $A_n$ denoting the dissatisfaction of user n of the electrical vehicle EV1, EV2, EV3, EV4, $O_n^{chp}$ the time interval the user n requires for external charging if charging the electric vehicle EV1, EV2, EV3, EV4 is done with charging control policy $chp_k$, $O_n^{uctl}$ the time interval the user n requires for external charging if charging the electric vehicle EV1, EV2, EV3, EV4 is done with uncontrolled charging.

In the detailed description of an embodiment, a mean additional charging time per day $\overline{A}$ over all electric vehicles n (users n), and a maximum additional charging time per day $\hat{A}$ over all electric vehicles n (users n) is used when determining the fractions. It is noted that the mean additional charging time $\overline{A}$ and the maximum additional charging time $\hat{A}$ may be determined for other reference time periods than a day d. In the discussed embodiment, using the reference time interval d proves convenient due to the behavior of humans regularly repeating in cycles of day. However, the approach is not restricted to using the mean additional charging time per day $\overline{A}$ over all electric vehicles n (users n), and the maximum additional charging time per day $\hat{A}$ over all electric vehicles n (users n).

An efficiency of the charging control policy can be measured in terms of the mean additional charging time per day $\overline{A}$ over all users n according to equation (5)

$$\overline{A} = \frac{\sum_{n=1}^{N} A_n}{N} \qquad (5)$$

In equation (5), $A_n$ denotes the dissatisfaction of the user n (electrical vehicle EV1, EV2, EV3, EV4 *n*), *N* the total number of electric vehicles *n* (users *n*), and $\overline{A}$ the mean additional charging time per day $\overline{A}$ over all electric vehicles EV1, EV2, EV3, EV4 (users n). A lower value for the mean additional charging time per day $\overline{A}$ indicates a higher efficiency of the respective charging control policy $chp_k$. Even if the efficiency is high, some of the users n may be treated disadvantageously. Hence, in order to achieve a fair charging over the entirety of user n, the charging system 1 also performs charging with reducing the maximum charging time per day $\hat{A}$ over all users n, e.g.

$$\hat{A} = max\ \{A_n | n = 1, ..., N\} \qquad (6)$$

In expression (6), $A_n$ denotes a dissatisfaction of user n (electrical vehicle *n*), *N* the total number of users *n*, *Â* the maximum additional charging time per day over all electric vehicles n (users n).

The behavior of the user n and the technical characteristics of the electric vehicles n vary among the users n and electric vehicles n. Thus, different users n benefit differently from different charging control policies $chp_k$.

The method combines multiple basic charging control policies that parameterize the combined charging control policy based on the historical information in order to achieve an efficient and fair charging control for the charging system 1.

The approach combines K basic charging control policies $chp_1, ..., chp_K$ according to the following scheme: In each time step, a fraction $\omega_{chp1}$ of the available energy $\Delta t \cdot P^{lim}$ is distributed to the connected electric vehicles EV1, EV2, EV3, EV4 with charging control policy $chp_1$.

Then a further fraction $\omega_{chp2}$ of the available charging energy $\Delta t \cdot P^{lim}$ is distributed to the connected electrical vehicles EV1, EV2, EV3, EV4 with charging control policy $chp_2$.

Yet a further fraction $\omega_{chp3}$ of the available charging energy $\Delta t \cdot P^{lim}$ is distributed to the connected electrical vehicles EV1, EV2, EV3, EV4 with a third charging control policy $chp_3$, and then so on for all the K charging control policies $chp_1, ..., chp_k$.

The description of an embodiment and the simulation experiments uses the normalized description of the total amount of available energy, which corresponds to the value 1. The fractions of the total amount of energy of each basic charging policy correspond to respective weights $\omega_{chpk}$ for each basic charging control policy $chp_k$.

The weights $\omega_{chpk}$ of the charging control policies are $w_{chpk} \in [0,1]$ for k=0, 1, ..., K and $\sum_{k=1}^{K} w_{chp_k} = 1$.

The approach achieves a good setting of the weights $\omega_{chp1}, ..., \omega_{chpK}$ by optimizing the weights with respect to mean additional charging times per day $\overline{A}$ and maximum additional charging time intervals per day $\hat{A}$ that are computed based on historical information. This means that the additional charging times for a given weight setting are computed by simulating the charging with this weight setting, considering historical behaviors of the users, e.g. the behavior of the users in the past 100 days.

The charging behavior of the users *n* and the characteristics of the electric vehicles EV1, EV2, EV3, EV4 may be directly logged by the charging equipment 6 of the charging system 1.

The daily energy consumption of the electric vehicles EV1, EV2, EV3, EV4 could either be logged by the electric vehicles EV1, EV2, EV3, EV4 or reported by the users via a human machine interface (HMI) of the charging system 1.

Since the two objectives of minimizing the mean additional charging time intervals per day $\overline{A}$ and minimizing the maximum additional charging time intervals per day $\hat{A}$ may conflict with each other, the approach optimizes the weights $\omega_{chp1}, ..., \omega_{chpK}$ by performing a multi-objective optimization with the two objectives

$$f1 = \min_{w_{chp_k}, k=1,...K} \bar{A}, \text{and} \qquad (7)$$

$$f2 = \min_{w_{chp_k}, k=1,...K} \hat{A}. \qquad (8)$$

In (7), (8), the term $\overline{A}$ denotes the mean additional charging time intervals per day over all electric vehicles (users), the term $\hat{A}$ refers to the maximum additional charging time intervals per day over all electric vehicles (users), the term $chp_k$ denotes the charging control policy, *K* denotes the total number of different charging control policies $chp_k$, $w_{chpk}$ refers to the weight of the kth charging control policy $chp_k$. *f1, f2* are objective functions of the multi-objective optimization.

The approach then selects a solution from the Pareto set resulting from the multi-objective optimization.

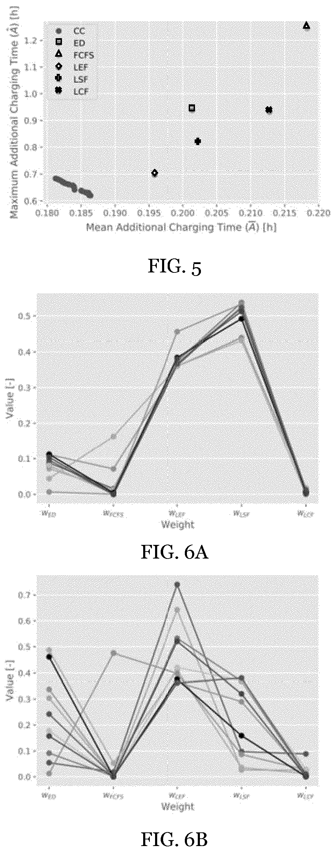

An embodiment of the method was applied in a simulated scenario. Results of the simulation experiments are displayed in more detail in figs. 5, 6A, B, 7A, 7B.

Fig. 3 provides a table with basic electric characteristics for different models of electric vehicles EV1, EV2, EV3, EV4 used in the simulation scenario used for discussing advantageous effects of the charging control method of an embodiment.

The simulation scenario assigns a specific model of an electric vehicle EV1, EV2, EV3, EV4 to each user. Fig. 3 illustrates five exemplary models A, B, C, D, E of electric vehicles EV1, EV2, EV3, EV4. A battery capacity C and a maximum charging power $P_{max}$ of each of the models A, B, C, D, E of the electric vehicles EV1, EV2, EV3, EV4 for the simulation are obtained from an electric vehicle database. The simulations assumes the users have only access to AC charging stations. In the simulation, a probability of a specific model of an electric vehicle EV1, EV2, EV3, EV4 to be assigned to a particular user are set proportional to reported sales numbers for the models A, B, C, D, E. Fig. 3 illustrates the models A, B, C, D, E of the electric vehicles with their respective technical data and the probabilities for the user having an electric vehicle EV1, EV2, EV3, EV4 of that particular model A, B, C, D, E.

Advantageous effects of the charging control method are discussed further based on simulation experiments evaluating the presented approach. The simulations include executing ten trials. In each trial, 1100 days of a basic scenario are simulated with different charging control policies. The simulations assume for sake of simplicity that all days are weekdays and excludes particular days, like national holidays. The simulations use different random number generator seeds in the different trials. The considered charging control policies include equal distribution policy, first-come-first serve policy, less-energy first policy, less-charged-first policy, and lower-SOC-first policy. In each trial, the first 100 days of the simulation are used for training the model. That means, they are used as historical information on which the weights of the combined policy are optimized. The remaining 1000 days are used as test data on which the different charging control policies are evaluated. For the multi-objective optimizations, the simulations used Non-dominated Sorting Genetic Algorithm II (NSGA-II) implemented in the Python library pymoo. The simulations use a population size of 20, executed 100 generations per optimization, and leave the remaining hyperparameters of NSGA-II to the default values from pymoo. K. Deb, A. Pratap, S. Agarwal, and T. Meyarivan provide in "A fast and elitist multiobjective genetic algorithm: NSGA-II," IEEE Trans. on Evolutionary Computation, vol. 6, no. 2, pp. 182-197, 2002, details of the implementation of the NSGA-II algorithm.

The simulations assume that at the beginning of the simulation, more precisely at the beginning of the 100 days training period and at the beginning of the 1000 days test period in the simulations, all electric vehicles have a battery level corresponding to an SOC of 0.5.

The simulation experiments base on N = 100 users and their respective electric vehicles EV1, EV2, EV3, EV4, ... EV100. The simulation of each day extends over T = 96 time steps of a length $\Delta t$ of 0.25 h of each time step. The time horizon represents the time period from 12 pm on a first day to 12 pm on the following day.

The simulation experiments assume a power limit $P^{lim}$ of 20 kW of available power for charging electric vehicles EV1, EV2, EV3, EV4 connected to the charging system 1. Determining the power limit bases on prior simulations indicating that at the $P^{lim}$ most of but not all requested charging processes could be completed.

A.L. Sørensen, K. Lindberg, I. Sartori, and I. Andresen, present in "Analysis of residential EV energy flexibility potential based on real-world charging reports and smart meter data," Energy and Buildings, vol. 241, p. 110923, 2021, a study including a methodology to describe charging habits electricity load profiles for charging of electrical vehicles (EV) in apartment buildings with multiple EV charging points. According to the analysis of real-world residential charging data on weekdays, the number of arrivals of electric vehicles EV1, EV2, EV3, EV4 at a charging station peaks in the time between 3 pm and 8 pm and the number of departures from the charging station peaks in the time between 6 am and 8 am. Based on the data, the simulation sets the arrival times and the departure times as follows: For each user n a mean arrival time $\mu_n^A$ is sampled from a truncated Gaussian distribution with a lower bound of 5, e.g. 1 pm, a mean of 25, e.g., 6 pm, an upper bound of 45, e.g., 11 pm, and a standard deviation of 8, e.g., 2 hours. The daily arrival time steps of a user n are sampled from a truncated Gaussian distribution with lower bound of 1, e.g., 12 pm, a mean of $\mu_n^A$, an upper bound of 96, e.g., 11:45 pm the following day, and a standard deviation of 2, e.g., 30 minutes, and are rounded to the closest integer values.

Analogously, for each user n a mean departure time $\mu_n^D$ is sampled from a truncated Gaussian distribution with a lower bound of 65, e.g. 4 am, on the following day, a mean of 77, 7 am, on the following day, an upper bound of 89, e.g., 10 am, on the following day and a standard deviation of 4, e.g., 1 hour, and the daily departure time steps are sampled from a truncated Gaussian distribution with the corresponding arrival time steps as lower bounds, a mean of $\mu_n^D$ an upper bound of 96 and a standard deviation of 2, e.g., 30 minutes.

The daily energy consumption $E_{n,d}$ of the user n are set based on daily driving range $R_{n,d}$ of the user n according to the expression

$$E_{n,d} = c \cdot R_{n,d} \qquad (9)$$

with c representing the energy consumption per km, which is assumed as constant and identical for all electric vehicles EV1, EV2, EV3, EV4.

In "Energy efficiency trade-offs in small to large electric vehicles," in: Environmental Sciences Europe, vol. 32, no. 1, pp. 1-17, 2020, M. Weiss, K. C. Cloos, and E. Helmers compiled an extensive dataset on a plurality of electric vehicles. Based on the analysis of real-world data, an energy consumption between 0.10 and 0.33 kWh/km for passenger cars as electric vehicles EV1, EV2, EV3, EV4 may be assumed to apply. Hence, the simulation experiments assume an energy consumption of c = 0.2 kWh/km.

For computing daily driving ranges $R_{n,d}$, the simulation experiments set a mean driving range $\mu_n^R$ per user n, which is sampled from a truncated Gaussian distribution with a lower bound of 15 ( 15 km), a mean of 30 (30 km), an upper bound of 100 (100 km) and a standard deviation of 10 (10 km). The daily driving ranges are sampled uniformly distributed

from the interval $[0.9 \cdot \mu_n^R, 1.1 \cdot \mu_n^R]$.

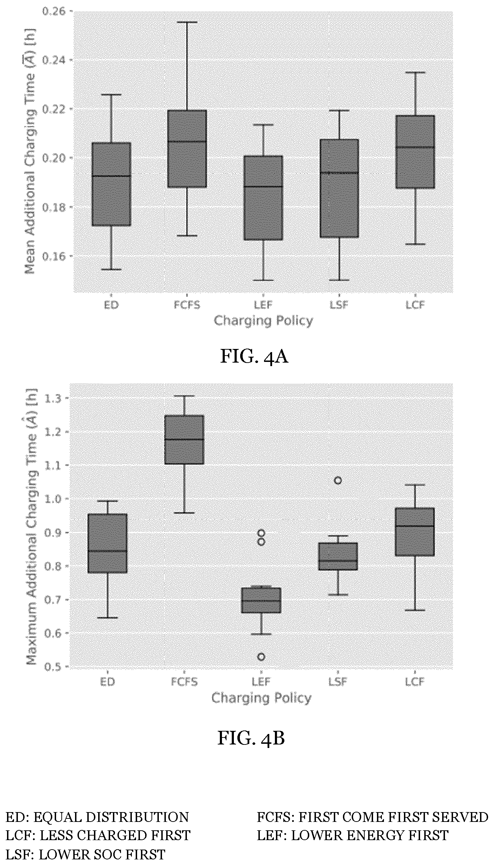

Fig. 4A illustrates distributions of mean additional external charging time intervals per day $\overline{A}$ with different basic charging control policies generated by simulations with the training data.

In figs. 4A and 4B, the horizontal axis differentiates between five basic charging control policies $chp_k$, in particular the ED charging control policy (ED), the FCFS charging control policy (FCFS), the LEF charging control policy (LEF), the LSF charging control policy (LSF), and the LCF charging control policy (LCF).

In particular, fig. 4A illustrates the mean additional external charging time intervals per day $\overline{A}$ for the five basic charging control policies based on simulations with 100 days of training data, and distributions over 10 trials.

Fig. 4B illustrates distributions of maximum additional external charging time intervals per day $\hat{A}$ for the basic charging control policies generated using the 100 days of training data, and 10 trials.

Charging control policies in fig. 4A that yield lower mean values also yield lower maximum values in fig. 4B. Thus, the criteria "efficiency" and "fairness" are not completely conflicting. The LEF policy performed best on the training data in the simulations based on the training data, having the lowest mean additional charging time interval per day $\overline{A}$ in 9 of the 10 trials and the lowest maximum additional charging time interval per day $\hat{A}$ in 8 of the 10 trials.

The FCFS policy performed notably worst among the simulated charging control policies, especially in terms of the maximum additional external charging time intervals per day $\hat{A}$.

Furthermore, one can see that there is more variance among the simulated charging control policies for the maximum additional external charging time intervals per day $\hat{A}$ than for the mean additional external charging times per day $\overline{A}$.

Fig. 5 illustrates an approximation of a Pareto front for the combined charging control policy and results of the basic charging control policies $chp_k$ generated based on the training data in the simulation.

On the abscissa of fig. 5, the mean additional charging time interval per day $\overline{A}$ in hours is shown. The ordinate of fig. 5 shows the maximum additional charging time interval per day $\hat{A}$ in hours.

In particular, fig. 5 depicts for one of the ten trials the Pareto front approximation resulting from the optimization based on the combined charging control policy (CC) according to the embodiment together with the performances of the basic charging control policies $chp_k$ for a comparison. In all ten trials, settings of weights $\omega_{chp}$ were found that resulted in the combined charging control policy outperforming each of the basic charging control policies in both objective functions *f1* and *f2*. However, both objective functions *f1* and *f2* are the results on the training data of 100 days, on which the weights $\omega_{chp}$ were optimized. Hence, fig 5 shows that by setting the weights $\omega_{chp}$ to optimum values, the combined charging control policy can outperform the basic charging control policies, but it less relevant for judging a practical benefit since during the predetermined time of 100 days of the training data the optimum weight setting is not yet known.

In next step, simulation experiments were used to evaluate the generalization of the approach on the test data including 1000 days. In particular, the simulation experiments evaluated in each trial the two weight settings corresponding to the extreme points of the Pareto front approximation on the test data. This approach intends to verify the practical benefit of the approach during the 1000 days included in the test.

Alternatively, instead of selecting the extreme points, the system may select a compromise solution, for example knee points or specific solutions of interest. G. Yu, Y. Jin, and M. Olhofer, disclose in "A method for a posteriori identification of knee points based on solution density", in: Proc. IEEE CEC, 2018, pp. 1-8, a method for identifying knee points in the decision making stage of evolutionary algorithms, even when located in both convex and concave regions of a Pareto front.

Alternatively, the method may determine the selected weights $\omega_{chp}$ based on acquiring a response from the community of users concerning their preferred balance to select the best trade-off, e.g., via the HMI of the charging control system. That means, the two weights $\omega_{chp}$ of the Pareto set, which yielded the best first objective function *f1* and best second objective function *f2*, respectively, on the training data. Publication "Incorporating human preferences in decision making for dynamic multi-objective optimization in model predictive control", in: Inventions, vol. 7, no. 3, 2022, by T. Schmitt, M. Hoffmann, T. Rodemann, and J. Adamy, propose a two-step approach for an a posteriori decision making in multi-objective optimization problems that incorporates human preferences in the process of selecting a solution from a Pareto front. In the following, we denote the combined charging control policy with the respective weights $w_{chp}$ as CC-f1 and CC_f2, respectively.

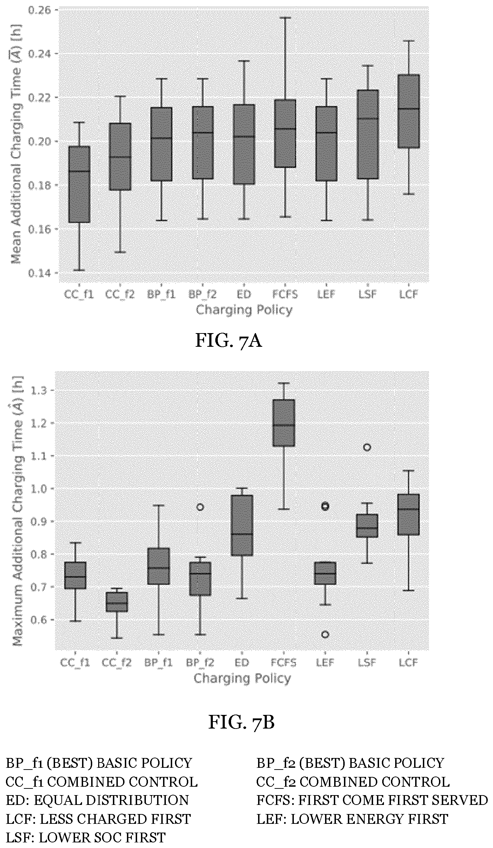

A simpler approach than tuning weights $w_{chp}$ of a combined charging control policy would be to select the basic charging control policy, which performed best on the training data for controlling charging of the batteries of the electric vehicles EV1, EV2, EV3, EV4 by the charging system 1. The simulations evaluated this approach on the test data and denote the basic charging control policies, which provided the best first objective and best second objective, as BF_f1 and BF_f2, in figs. 7A and 7B respectively. These might be different policies in different trials of the simulation.

Figs. 6A and 6B show the results with the different charging control policies $chp_k$ on the test data.

Fig. 6A depicts weights $w_{chp}$ yielding the best mean additional external charging time intervals per day $\overline{A}$ generated with the training data.

Fig. 6B depicts weights $w_{chp}$ yielding the best maximum additional external charging time intervals per day $\hat{A}$

generated with the training data.

In figs. 6A and 6B, the horizontal axis lists the five basic charging control policies $chp_k$, in particular the ED charging control policy (ED), the FCFS charging control policy (FCFS), the LEF charging control policy (LEF), the LSF charging control policy (LSF), and the LCF charging control policy (LCF).

Figs. 6A and 6B show the optimized weights $w_{chp}$ calculated in the ten trials of the simulation experiments. Figure 6A shows the weights $w_{chp}$ yielding the best first objective, i.e., the weights $w_{chp}$ corresponding to the combined charging control policy CC_f1.

Fig. 6B shows the optimized weights $w_{chp}$ yielding the best second objective, the weights $w_{chp}$ corresponding to the combined charging control policy CC_f2.

Figs. 6A and 6B illustrate the calculated weights $w_{chp}$ of the CC_f1 charging control policy typically weight the LSF charging control policy higher than the LEF charging control policy.

Figs. 6A and 6B illustrate that the weights $w_{chp}$ of the CC_f2 charging control policy weight the LEF charging control policy higher than the LSF charging control policy. The FCFS and LCF charging control policies have only small weights $w_{chp}$. This originates in the training data, which showed these two policies, the FCFS and LCF charging control policies, having the highest additional charging time intervals per day.

The ED charging control policy tends to be weighted higher by the weights $w_{chp}$ of the CC_f2 charging control policy than by the weights $w_{chp}$ of the CC_f1 charging control policy. The weights $w_{chp}$ of the CC_f2 charging control policy exhibit a higher variance over the ten trials than the weights $w_{chp}$ of the CC_f1 charging control policy.

Figs. 7A and 7B show the results with the different charging control policies on the test data.

Fig. 7A illustrates distributions of mean additional external charging time intervals per day $\overline{A}$ with different basic charging control policies generated with test data over the ten trials.

Fig. 7B illustrates distributions of maximum additional external charging time intervals per day $\hat{A}$ with different basic charging control policies generated using test data over the ten trials.

In figs. 7A and 7B, the horizontal axis differentiates between five basic charging control policies $chp_k$, in particular the ED charging control policy (ED), the FCFS charging control policy (FCFS), the LEF charging control policy (LEF), the LSF charging control policy (LSF), and the LCF charging control policy (LCF). The horizontal axis differs also between the combined charging control policies based on the objectives $f1$ and $f2$, denoted by combined charging control policy CC_f1 and CC_f2 respectively, and the combined charging control policies based on the objectives f1 and f2 alone, denoted by combined charging control policy BF_f1 and BF_f2 respectively.

The combined charging control policy generalizes to the test data. The CC_f1 charging control policy performs best in the first objective and the CC_f2 charging control policy performs best in the second objective.

In all 10 trials, CC f1 charging control policy yields a lower mean additional charging time interval per day $\overline{A}$ than the charging control policy BF_f1.

In all 10 trials, charging control policy CC_f2 yields a lower maximum additional charging time interval per day $\hat{A}$ than the charging control policy BF_f2.

Averaged over the 10 trials, the mean additional charging time interval per day $\overline{A}$ is 0.018 h (1.08 min) lower with the charging control policy CC_f1 than with the charging control policy BF f1 and the maximum additional charging time interval is 0.092 h (5.52 min) lower with the charging control policy CC_f2 than with the charging control policy BF_f2.

In seven of the ten trials, the charging control policy CC_f1 yields also a lower maximum additional charging time interval per day $\hat{A}$ than the charging control policy BF_f2, on average 0.005 h (0.3 min) lower.

In nine of the ten trials, the charging control policy CC_f2 yields a lower mean additional charging time interval per day $\overline{A}$ than the charging control policy BF_f1, on average 0.008 h (0.48 min) lower.

Thus, the combined charging control policy is especially promising for improving the fairness of the executed charging processes of the charging system 1 assuming that it can yield a notable improvement in the maximum additional charging time interval per day $\hat{A}$ compared to the single basic charging control policies. Simultaneously, the combined charging control policy still yields a good mean additional charging time interval per day $\overline{A}$.

The combined charging control policy CC_f2 reduces the maximum additional charging time interval per day $\hat{A}$ by on average 11.7% compared to the best single charging control policy BF_f2.

An evaluation of different charging control policies for distributing the limited amount of energy available to the charging system 1 to multiple electric vehicles EV1, EV2, EV3, EV4 in the simulation experiments illustrates that the basic charging control policies differ in terms of efficiency and especially in terms of fairness. The combined charging control policy according to the embodiment achieves a higher efficiency and fairness by using a weighted combination of the plural charging control policies for distributing the limited amount of energy. The method employs a multi-objective optimization for parameterizing the combined charging control policy and thereby tailors it to the characteristics of the users and their electric vehicles EV1, EV2, EV3, EV4. The simulation experiments reveal the approach based on the combined charging control policy to outperform each of the single charging control policies.

The parameterization of the approach based on the combined charging control policy requires recording and using detailed data about the charging and driving behavior of the users with their electric vehicles EV1, EV2, EV3, EV4.

However, an analysis of the experimental results enables to determine correlations between statistics of user behavior and characteristics of the electric vehicles EV1, EV2, EV3, EV4 on the one hand and optimum settings of the parameters for the combined charging control policy on the other hand.

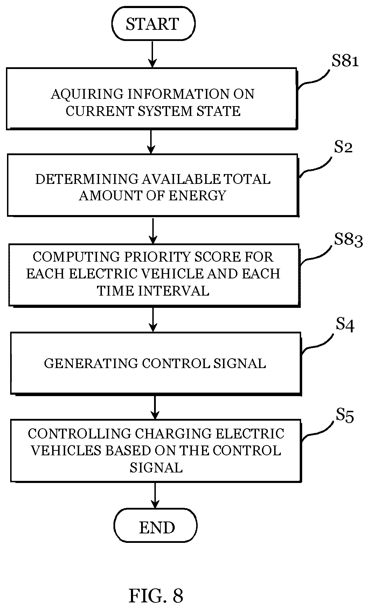

Fig 8 provides a flowchart giving an overview over a charging control method according to an exemplary embodiment.

The flowchart of fig. 8 illustrates a processing sequence in an application phase, in which charging processes for electric vehicles connected with the charging system 1 are controlled. The application phase is preceded by a training phase, in which a genetic programming algorithm and historical information on charging processes is used to compute a formula for basing the control of charging processes on the formula and information on the current state of the charging system 1 as input.

In the application phase, the method starts with a step S81 of acquiring information on a current system state of the charging system 1. In particular, the information on a current system state of the charging system 1 includes information on charging parameters and battery parameters of the electric vehicles EV1, EV2, EV3, EV4.

The method then determines in step S2, information on the available total amount of energy for charging the batteries the electric vehicles EV1, EV2, EV3, EV4 for each time step.

In step S83, the method computes, for each time step, and for each charging control policy of the plurality of charging control policies, based on the acquired information, for each of the electric vehicles EV1, EV2, EV3, EV4, a priority score by using a formula determined by genetic programming. The method then proceeds with determining the fraction of the total amount of energy for charging the batteries of the electric vehicles EV1, EV2, EV3, EV4 for each time step and, furthermore, for each of the electric vehicles EV1, EV2, EV3, EV4 based on the computed priority score.

The information on charging parameters and battery parameters of the electric vehicles EV1, EV2, EV3, EV4 of the acquired information on the system state comprises at least one feature of an energy capacity of the battery of each of the electric vehicles EV1, EV2, EV3, EV4, an energy capacity of each of the vehicles EV1, EV2, EV3, EV4, a state-of-charge of the battery of each of the electric vehicles EV1, EV2, EV3, EV4, an arrival time step (time interval) of each of the electric vehicles EV1, EV2, EV3, EV4, a maximum charging power of the electric vehicle, and a state of charge at the arrival of the electric vehicle, and a charged-energy-since-arrival divided by a number-of-time-intervals-since-arrival (number-of-time steps-since-arrival) of each of the electric vehicles EV1, EV2, EV3, EV4.

The formula has been determined by applying a genetic programming algorithm on the acquired historical information in a training phase, which precedes the subsequent application phase, in which the determined formula for computing the priority score is applied to current data that includes the acquired information on the current state of the system.

Genetic programming is an evolutionary algorithm and thus an artificial intelligence technique that operates on a population of programs by applying the genetic operators selection according to a predefined fitness measure, mutation, and crossover.

Using genetic programming for determining the formula for determining the priority score, e.g. based on historic data and in a training phase enables to adapt computing the priority score using the formula to the specific charging system and its use based on test data. Re-training for determining an adapted formula in a rerun of the training phase ensures that the charging system is able to cope with changing conditions over a long time of usage of the charging system.

In the training phase, a process of determining the formula by the genetic programming technique includes a step of selecting from candidate formulas for further processing based on a predefined fitness measure or objective. The fitness measure may base on at least one of a mean additional charging time of the electric vehicles EV1, EV2, EV3, EV4 and a maximum additional charging time for the electric vehicles EV1, EV2, EV3, EV4.

Using the cited fitness measure ensures achieving control of the charging system that achieves high satisfaction with its users, as the time and effort required for an external charging of the batteries of the electric vehicles EV1, EV2, EV3, EV4 decrease.

Controlling charging the batteries of the electric vehicles EV1, EV2, EV3, EV4 based on the computed priority score enables prioritizing at least a first electric vehicle EV1, EV2, EV3, EV4 of the electric vehicles EV1, EV2, EV3, EV4 over at least one second electric vehicle EV1, EV2, EV3, EV4 of the electric vehicles EV1, EV2, EV3, EV4 based on the computed priority score.

The computation is repeated at regular intervals, e.g. each time interval, for updating the computed priority scores.

Returning to the application phase and the method illustrated in fig. 8, the processing then proceeds to step S4, in which the control circuit 7 generates a control signal for controlling charging, during each time step, the batteries of the electric vehicles EV1, EV2, EV3, EV4 based on the computed priority scores. The control circuit 7 outputs the generated control signal to the vehicle charging equipment 6, in particular the vehicle charging interfaces 6.1, 6.2, 6.3, 6.4 via the vehicle charging interface 7.2.

The control circuit 7 may output the generated control signal to the power distributor 4.

In step S5, the vehicle charging equipment 6 charges, during each time step, the batteries of the electric vehicles

EV1, EV2, EV3, EV4 with electric energy based on the control signal, in particular based on the computed priority scores.

An exemplary embodiment for implementing step S5 of controlling charging, during each time step, the batteries of the electric vehicles EV1, EV2, EV3, EV4 may base on the computed priority scores. Publication "Impact of priority criteria on electric vehicle charge scheduling" by Kandasamy Nandha Kumar et al, 2015. In: IEEE Transactions on Transportation Electrification, vol. 1, Nr. 3, October 2015, pages 200-210, may provide useful information for implementing the charging step S5.

The exemplary embodiment may apply priority scores that are based on the parameters similar to the prior art. In expression (9), the priority score $\alpha_i^1$ represents a priority score based on state of charge $SOC_i$ of the battery of the electric vehicle $EV_i$ as given by (9), $\alpha_i^2$ represents the priority score, e.g. based on a slack time available for charging as given by (10), and $\alpha_i^3$ represents the priority score based on time or energy already allotted for the electric vehicle $EV_i$ as given by (11):

$$\alpha_i^1 = 1 - \left(\frac{SOC_i}{100}\right); \qquad\qquad (9)$$

$$\alpha_i^2 = 1 - \left(\frac{N_{dep,i} - N_{req,i}}{N_{total,i}}\right); \qquad\qquad (10)$$

$$\alpha_i^3 = 1 - \left(\frac{E_{sup,i}}{E_{total,i}}\right); \qquad \text{or } \alpha_i^3 = 1 - \left(\frac{N_{com,i}}{N_{total,i}}\right); \qquad\qquad (11)$$

In (10), $N_{dep,i}$ denotes a number of half hour time intervals (half-hour time steps) from a current time to a departure time for the electric vehicle $EV_i$. In expression (11), $E_{total,i}$ the energy required to charge the battery of the electric vehicle $EV_i$ from an initial state SOC to the desired SOC. The index i is the EV number, and $\alpha_i^1 i$ is the priority score, which accounts for the current $SOC_i$ of the i-th EV. $SOC_i$ is the battery SOC, in %, of the i-th electric vehicle $EV_i$. A satisfaction of the user is considered higher if the EV of the user can be charged to the desired SOC before departure of the electric vehicle with the user. As expressed in (9), the priority score will decrease with increase of SOC. Hence, the EV with lower SOC will have higher priority score. This parameter achieves an increase in user satisfaction. $\alpha_i^2$ is the priority score which accounts for the slack time available for charging the i-th EV. $N_{dep,i}$ denotes the number of half-hour time intervals from the current time to departure time for the i-th electric vehicle $EV_i$. $N_{req,i}$ is the minimum number of half-hour time intervals required for charging the electric vehicle $EV_i$ up to the desired $SOC_i$. $N_{total,i}$ is an equivalent number of half-hour time intervals required for charging EV from initial SOC to the desired SOC. Slack time is the difference between the time available before departure and time required to complete charging the electric vehicle $EV_i$. With an increase in the value of the slack time, the feasibility of charging the $EV_i$ to desired $SOC_i$ is higher, thus the priority score $\alpha_i^2$ will decrease with increase in slack time. This will enable the electric vehicle $EV_i$ with lower the value of slack time to have higher priority for charging as expressed in expression (10). The priority score $\alpha_i^2$ enables to ensure a high degree of fairness to the users of the electric vehicles $EV_i$.

The priority score $\alpha_i^3$ accounts for a percentage of charging completed. The parameter $E_{sup,i}$ is the energy supplied to the electric vehicle $EV_i$ and $E_{total,i}$ is the energy required to charge the electric vehicle $EV_i$ from the initial SOC to the desired SOC. When regarding time-coordinated charging TCC, $N_{com,i}$ corresponds to an equivalent number of half-hour time intervals used for charging the i-th electric vehicle $EV_i$. The percentage of charging intervals completed for the i-th electric vehicle $EV_i$ represents the amount of resources already allocated for that particular electric vehicle $EV_i$. Therefore, the higher the $E_{sup,i}$ or $N_{com,i}$, the lower will be the priority for charging as indicated in expression (11). This parameter is required to balance the degree of fairness between the electric vehicles $EV_i$ having the same battery capacity.

Either power-coordinated or time-coordinated charge scheduling methods based on dynamic charge scheduling may be used to study the impact of priority values on the chargeability of electric vehicles EV to their respective required SOC and the fairness in the allocation of charging time/power. When performing time coordinated charging (TCC), the number of electric vehicles EV allowed to charge at a given time is controlled in order to ensure that the total electric vehicle load demand is within the total electric power available for charging the electric vehicles EV. Power coordinated charging (PCC) ensures that the total electric vehicle load demand is within the total available power charging the electric vehicles.

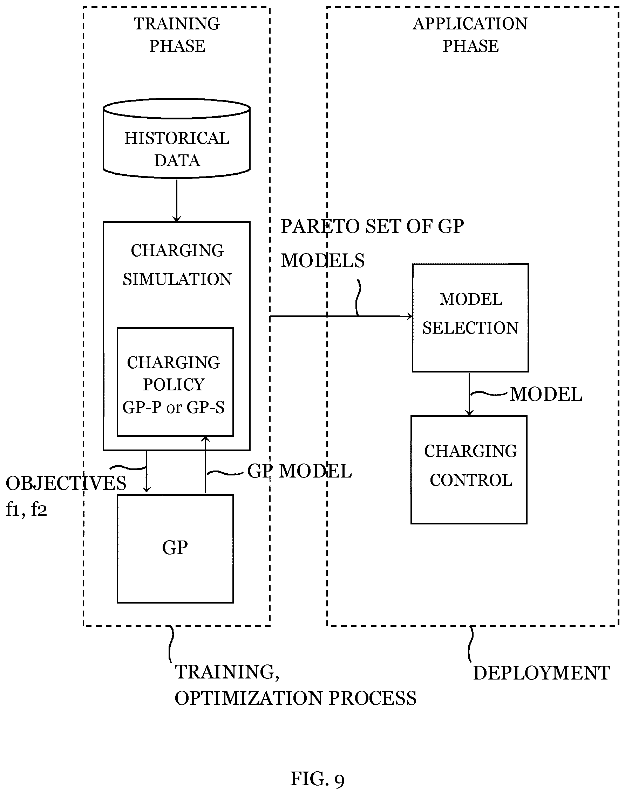

Fig. 9 illustrates the processing in a charging control method according to an exemplary embodiment. In particular, fig. 9 shows both a training phase, in which the formula for determining the priority scores is determined via genetic programming, and an application phase for controlling charging, using the determined formula with information on the current state of the charging system 1.

In the discussed embodiment, the problem is formulated as an optimization problem with two objectives *f*1 and *f*2. The embodiment uses the genetic programming (GP) approach to learn a GP model with the target to achieve a high performance with respect to the two objectives *f*1 and *f*2. GP as particular type of an evolutionary algorithm that evolves programs, expressions or formulas.

Before discussing the processing in more detail, some aspects on the problem setting are discussed.

A number *N* of electric vehicle users are considered, who share a compound that includes a residential garage for parking and charging at individual charging stations in the compound. The total charging power available is limited by a value $P^{lim}$, e.g., due to transformer constraints. The power limit is smaller than the sum of the maximum possible charging powers of the electric vehicles. The charging system 1 uses a rule-based charging control for ensuring that the power limit is not violated, which periodically, e.g., every 15 minutes distributes the available power/energy to the connected electric vehicles, which are not fully charged yet, based on a particular charging policy.

Departure times and energy requirements of the users are not available as input for the rule-based charging control. The charging control would result in a dissatisfaction of those users whose charging demands are satisfied less compared to uncontrolled charging.

It is assumed that the users have the possibility to charge externally at public charging stations or their workplaces, but the users are assumed to prefer charging at home. Hence, dissatisfaction of the users of the charging system 1 is expressed in terms of the additional time they have to spend per day for external charging compared to uncontrolled charging. The disclosed approach provides a charging policy, which results in low additional external charging times resulting in a high satisfaction of the users.

Historical information of charging behaviors and demands of the users over D days in the past is available. The historical information allows evaluating different charging policies on the historical information in a simulation. The simulation estimates how long the daily additional external charging times of the users would have been in the historical time period if a certain control policy had been used. In a training phase, the exemplary embodiment learns a charging policy, which performs well on the historical information assuming that it will also perform well in the future on acquired information on a current state of the charging system 1.

The following discussion of the exemplary embodiment uses more specific:

For each of the *D* days of historical data, a time horizon of *H* time steps of a length of $\Delta t$ hours each is considered. Every day d, each user n initiates a charging session in the corresponding time horizon with arrival and departure time steps $t_{n.d}^A$ and $t_{n.d}^D$ respectively, and an arrival battery level $B_{n,d}^A$ in kWh.

In each time step *t* (with $t_{n.d}^A \le t \le t_{n.d}^D$) of a user n's charging session, the user's EV is charged with a certain charging power $P_{n,d,t} \le P_n^{max}$. The charging power $P_n^{max}$ is the maximum charging power of the user's EV in kW. After the time step, the battery level $B_{n.d.t}$ of the user's EV is

$$B_{n.d.t} = \begin{cases} \min\{C_n, B_{n,d}^A + \Delta t \cdot P_{n,d,t}\} & t = t_{n,d}^A \\ \min\{C_n, B_{n.d.t-1} + \Delta t \cdot P_{n,d,t}\} & else, \end{cases} \quad (12)$$

In expression (12), $C_n$ is the battery capacity of the EV in kWh. The battery level $B_{n.d.t_{n,d}^D}$ after time step $t_{n,d}^D$ is the departure battery level $B_{n,d}^D$ of user n on day d. After charging their electric vehicle on a day d, a user drives a certain range and thus consumes a certain amount of energy $E_{n,d}$ before returning to the charging system 1 for charging the battery on the next day d + 1. The users are assumed to intend maintaining their state of charge SOCs over a certain minimum SOC $S^{min} \in [0, 1]$ and that the users recharge their electric vehicles externally if necessary in order to not fall below the minimum SOC. Thus, it is assumed that the arrival battery level of a user n on day d (except the first day) is

$$B_{n,d}^A = \max\{B_{n,d-1}^D - E_{n,d-1}, S^{min} \cdot C_n\} \quad (13)$$

Assuming that the users can recharge with their respective maximum charging power externally, a user n has to spend on average

$$T_n = \frac{60}{D} \sum_{d=1}^{N} \frac{max\{0, S^{min} \cdot C_n + E_{n.d} - B_{n,d}^D\}}{P_n^{max}} \qquad (14)$$

minutes per day for external charging. In (14), the factor 60 results from converting from hours to minutes.

A rule-based control decides on the charging powers of connected electric vehicles EV in each time step ensuring a limit $P^{lim}$ for the total charging power. The term $T_n$ (CP) denotes a daily external charging time of a user n if the charging powers are set with a charging policy CP. Similarly, $T_n$ (UCTL) denotes the daily external charging time of the user n with uncontrolled charging, which does not consider a power limit and always charges connected electric vehicles EV with their maximum possible charging powers. The dissatisfaction of user n with charging policy CP can be expressed as the additional daily external charging time compared to uncontrolled charging according to (15):

$$T_{n,add} (CP) = T_n (CP) - T_n (UCTL) \qquad (15)$$

The efficiency of a charging policy CP in terms of the overall user satisfaction is measured as the mean additional charging time per day $\overline{T}_{add}$ (CP) over all users in (16) as

$$\overline{T}_{add} (CP) = \frac{\sum_{n=1}^{N} T_{n,add} (CP)}{N} \qquad (16)$$

In (16), a lower value of $\overline{T}_{add}$ (CP) indicates a higher efficiency. However, even with a high efficiency, some of the users might be treated very disadvantageously. Thus, in addition to efficiency, fairness is considered, which is measured according to the min-max fairness principle, as the maximum additional charging time per day $\hat{T}_{add}$ (CP) over all users:

$$\hat{T}_{add}(CP) = max\{T_{n,add} (CP)| n = 1, ..., N\}, \qquad (17)$$

where again a lower value indicates a higher fairness. Ultimately, the problem consists in learning a charging policy, which minimizes the two objective functions f1 and f2 on the historical information:

$$\min_{CP} f1 = \overline{T}_{add} (CP) \qquad (18)$$

$$\min_{CP} f2 = \hat{T}_{add}(CP) \qquad (19)$$

The previously discussed approach is only one example of problem setting. For example, the exemplary embodiment is also applicable in scenarios in which the electric vehicles EV do not have exactly one charging session per day.

It is also independent of the metrics used to assess a quality of the charging service. For example, a (dis-) satisfaction of users may use alternative expressions than the external charging times or another fairness definition than min-max based fairness.

Generally, for determining a model, which performs well with respect to a given objective function, GP adheres to the typical workflow of evolutionary algorithms. Genetic programming uses a set, known as population, of a fixed number of solution candidates that are also known as the individuals.

GP starts with an initial population.

Then GP iteratively varies the population. Each iteration, known as generation, includes selecting parent individuals from the population and generating offspring individuals by applying a crossover operator and a mutation operator to the selected parent individuals.

The crossover operator combines two or more parents. The mutation operator applies random changes to an individual.

GP then evaluates the offspring individuals with the objective function, and selects survivor individuals from the parent population and the newly generated offspring individuals based on the evaluated objective function. The selected survivor individuals then form the population of the next generation.

The exemplary embodiment evolves a GP model, which takes as input variables K numerical features $X_1, ..., X_K$ of an electric vehicle. The input variables may include, for example, the state of charge (SOC) of the electric vehicle, and the maximum charging power. The GP model computes as output a numerical value v. The GP model is applied in control of charging of electric vehicles to compute in each time step with c > o connected electric vehicles, values $v_1, ..., v_c$ for the electric vehicles connected to the charging system 1 and to determine the charging power or the energy allocated to the connected electric vehicles based on the computed values $v_1, ..., v_c$.

Exemplary embodiments may apply one of two different approaches for deciding on the charging powers based on the output of the GP model.

A first approach, denoted as GP-P in the following discussion, applies the computed values $v_1, ..., v_c$ provided by the GP model as priorities. First, the electric vehicle $EV_n$ with the highest priority, e.g., the largest value $v_n$ of the computed values $v_1, ..., v_c$, is allocated as much energy as available. This means that the minimum of the available energy $E^{avail} = P^{lim} \cdot \Delta t$ and the maximum technically possible amount of energy that the electric vehicle $EV_n$ can charge in the current time step:

$$E_n^{alloc} = \min\left\{E^{avail}, min\{C_n - B_n, P_n^{max} \cdot \Delta t\}\right\}, \qquad (20)$$

where $C_n$ is the battery capacity, $B_n$ is the battery level and $P_n^{max}$ is the maximum charging power of $EV_n$. Subsequently, as much of the remaining available energy is allocated to the electric vehicle with the second largest value $v_n$ of the computed values $v_1, ..., v_c$, interpreted as the electric vehicle with the second highest priority. This process is repeated until a termination criterion is met.

The termination criterion may be met when energy has been allocated to all electric vehicles EV connected to the charging system 1. Additionally or alternatively, the termination criterion may be met when all available energy has been allocated to electric vehicles EV.

The second approach, which is denoted as GP-S in the following discussion, includes determining shares of the available energy allocated to the electric vehicles EVs connected to the charging system 1 based on the computed values $v_1, ..., v_c$, computed with the GP model. A set C of electric vehicles EV comprises electric vehicles EV, which are connected with the charging system 1 and are not fully charged. Each electric vehicle $EV_n \in$ C is allocated an amount of energy according to (24):

$$E_n^{alloc} = \min\left\{\frac{|v_n|}{\sum_{k \in C}|v_k|} \cdot E^{avail}, min\{C_n - B_n, P_n^{max} \cdot \Delta t\}\right\}, \qquad (24)$$

In the second approach GP-S, the normalized absolute values of the values $v_1, ..., v_c$ computed for the connected electric vehicles EV determine the respective share of the available energy allocated to each of the electric vehicles EV. If not all of the available energy is allocated, the remaining energy is allocated in an analogous manner to electric vehicles EV, which can charge more than the currently allocated amount of energy. In the first approach GP-P, in each time step, electric vehicles EV with a high priority are charged as much as possible. Simultaneously, electric vehicles EV that have a low priority are not charged at all. The second approach GP-S has the effect of distributing the available energy more evenly over the electric vehicles EV connected with the charging system 1.

In the exemplary embodiment, GP is used to determine a model, which results in high objective values when applied in the GP-P or GP-S charging control approach on the historical data.

A further exemplary embodiment uses multi-objective genetic programming (multi-objective GP), which computes a set of non-dominated solutions. This embodiment is particularly advantageous as the two considered objective functions $f_1$ and $f_2$ are at least partly conflicting.

Multi-objective GP addresses a multi-objective minimization problem with a search space $\Omega$ and M objective functions $f1, ..., f_M$. In multi-objective GP, a first solution $x_1 \in \Omega$ dominates a second solution $x_2 \in \Omega$ in case the first solution $x1$ is better than the second solution $x_2$ with regard to one objective and at least as good as the second solution $x_2$ in the other objectives:

$$f_m(x_1) \leq f_m(x_2) \, \forall m = 1, ..., M \, and \, \exists m \in \{1, ..., M\} : f_m(x_1) < f_m(x_2). \qquad (25)$$

A solution $x_1 \in \Omega$ is called non-dominated if there is no other solution $x_2 \in \Omega$ that dominates $x_1$. The set of all non-dominated solutions is a *Pareto set* and the corresponding set of objective values is the *Pareto front*. The target of multi-objective optimization is to compute a set of mutually non-dominating solutions that approximates the real Pareto set well. Generally, genetic programming and evolutionary algorithms in general are suited for multi-objective optimization, as evolutionary algorithms and genetic programming use a set of solution candidates per default. When the optimization process terminates, the non-dominated solutions included in the final population are returned as an approximation of the Pareto set.

Multi-objective operators for the selection of parent and survivor individuals that have the ability to guide an optimization towards a good approximation of the Pareto set, are generally known. For example, a selection strategy may use the Non-dominated Sorting Genetic Algorithm (NSGA-II) for multi-objective GP. Fig. 9 summarizes a framework and approach for an exemplary embodiment.

Using historical data on user charging behavior, a simulation is set up, which allows to simulate charging the electric vehicles in the historical time period with controlled charging using different charging policies. Using the results of the simulation, charging policies are evaluated with respect to two the objectives $f1$ and $f2$, which represent the mean and maximum daily additional external charging times of the users.

Multi-objective GP is employed to search for GP models, which perform well in terms of the two objectives $f1$ and $f2$. The GP models are used in the charging control policy either to prioritize electric vehicles EV according to the first approach GP-P, or alternatively to directly compute shares of the available energy allocated to the electric vehicles EV according to the second approach GP-S. The resulting set of mutually non-dominating solutions or policies may support a decision maker in selecting one of the mutually non-dominating solutions or policies for use in an implementation.

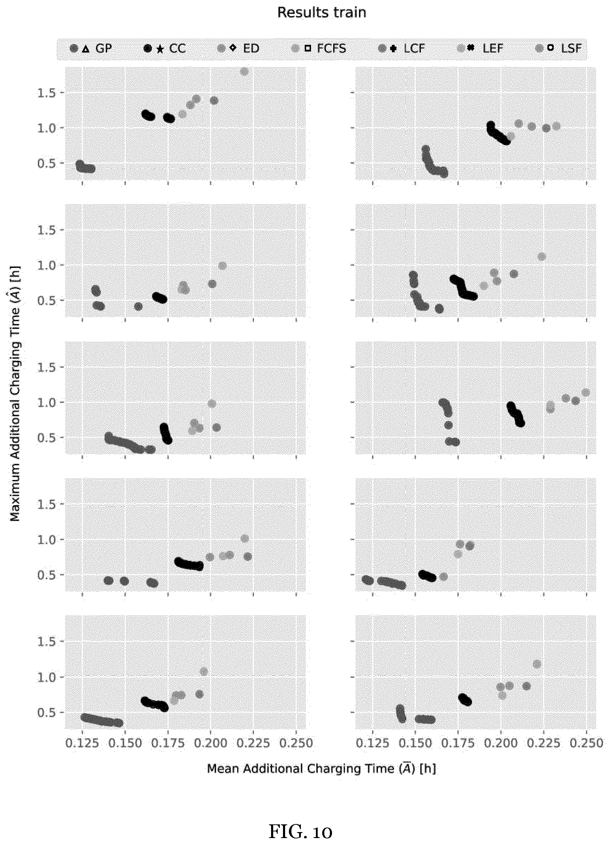

Fig. 10 shows a comparison for experimental results on training data for different embodiments compared with basic charging control policies. In particular, fig. 10 illustrates an approximation of a Pareto front for the combined charging control policy CC and of the charging control policy based on genetic programming GP and results of the basic charging control policies $chp_k$, generated based on the training data in the simulation. The basic charging control policies shown with results in fig. 10 are the ED charging control policy (ED), the FCFS charging control policy (FCFS), the LCF charging control policy (LCF), the LEF charging control policy (LEF), and the LSF charging control policy (LSF). On the abscissa of fig. 10, the mean additional charging time interval per day $\overline{A}$ in hours is shown. The ordinate of fig. 10 shows the maximum additional charging time interval per day $\hat{A}$ in hours.

In all ten trials of fig.9 using the training data, the generated approximation of the Pareto front for the combined charging control policy CC outperforms the results achieved with the basic charging control policies with regard to the mean additional charging time $\overline{A}$ in hours per day. In most trials shown in fig. 10, the Pareto front generated for the combined charging control policy CC provides a maximum additional external charging time intervals per day $\hat{A}$ in hours that is smaller than the results provided by the basic charging control policies.

Concerning the performance of the charging control policy based on genetic programming GP in the ten trials of fig. 10, the Pareto front shows smaller values for the mean additional external charging time intervals per day $\overline{A}$ than the Pareto front of the combined charging control policy CC. Furthermore, the charging control policy based on genetic programming GP in six of the ten trials also has a significantly smaller maximum additional external charging time intervals per day $\hat{A}$ than the Pareto front of the combined charging control policy CC.

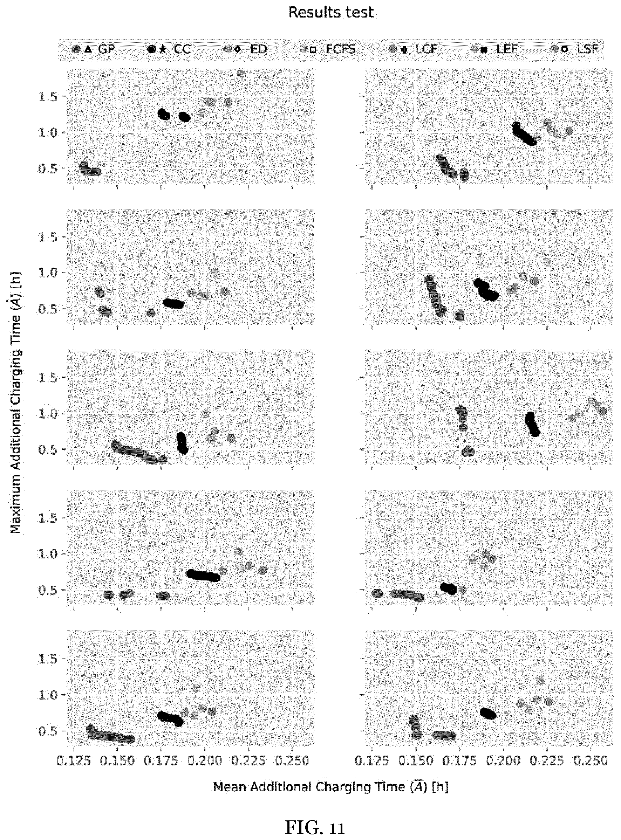

Fig. 11 displays a comparison for experimental results on test data for different embodiments compared with basic charging control policies.

In particular, fig. 11 illustrates an approximation of a Pareto front for the combined charging control policy CC and of the charging control policy based on genetic programming GP and results of the basic charging control policies $chp_k$, generated based on the test data in the simulation. The basic charging control policies shown with results in fig. 11 are the ED charging control policy (ED), the FCFS charging control policy (FCFS), the LCF charging control policy (LCF), the LEF charging control policy (LEF), and the LSF charging control policy (LSF). On the abscissa of fig. 11, the mean additional charging time interval per day $\overline{A}$ in hours is shown. The ordinate of fig. 11 shows the maximum additional charging time interval per day $\hat{A}$ in hours.

In all ten trials of fig.9 using the training data, the generated approximation of the Pareto front for the combined charging control policy CC outperforms the results achieved with the basic charging control policies with regard to the mean additional charging time $\overline{A}$ in hours per day. In many trials shown in fig. 11, the Pareto front generated for the combined charging control policy CC provides a maximum additional external charging time intervals per day $\hat{A}$ in hours that is smaller than the results provided by the basic charging control policies.

Concerning the performance of the charging control policy based on genetic programming GP in the ten trials of fig. 11, the Pareto front shows smaller values for the mean additional external charging time intervals per day $\overline{A}$ than the Pareto front of the combined charging control policy CC. Furthermore, the charging control policy based on genetic programming GP in six of the ten trials also has a significantly smaller maximum additional external charging time intervals per day $\hat{A}$ than the Pareto front of the combined charging control policy CC.

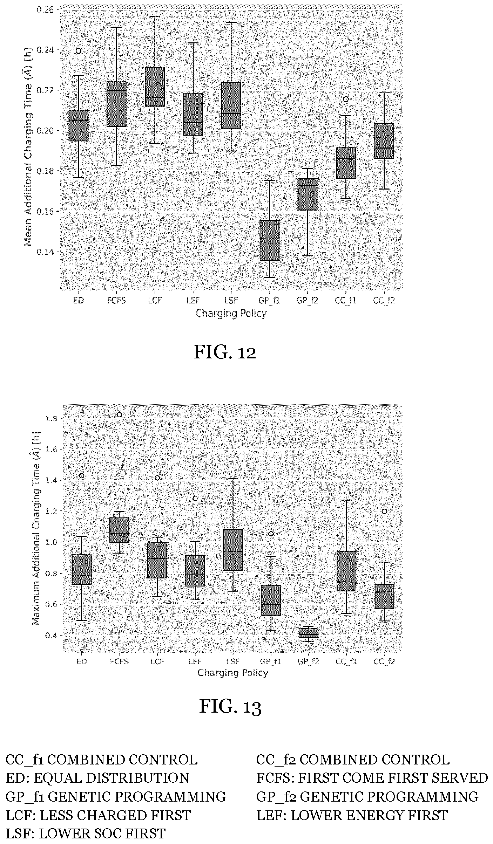

Figs. 11 and 12 show the results with the different charging control policies on the test data. In figs. 11 and 12, the horizontal axis differentiates between five basic charging control policies $chp_k$, in particular the ED charging control policy (ED), the FCFS charging control policy (FCFS), the LEF charging control policy (LEF), the LSF charging control policy (LSF), and the LCF charging control policy (LCF). The horizontal axis differs also between the combined charging control policies based on the objectives $f1$ and $f2$, denoted by combined charging control policy CC_f1 and CC_f2 respectively, and the charging control policy using genetic programming based on the objectives f1 and f2 alone, denoted by the charging control policies GP_f1 and GP_f2 based on genetic programming, respectively.

Fig. 12 shows a comparison for experimental results for the mean additional charging time for different embodiments compared with different charging control policies. In particular, fig. 12 illustrates distributions of mean additional external charging time intervals per day $\overline{A}$ with different basic charging control policies generated with test data over ten trials.

The CC_f1 charging control policy outperforms the basic charging policies ED, FCS LCF, LEF, and LSF in the first objective and the CC_f2 charging control policy outperforms with respect to the mean additional external charging time intervals per day $\overline{A}$ in the second objective. In all 10 trials, CC f1 charging control policy yields a lower mean additional charging time interval per day $\overline{A}$ than the charging control policy BF_f1.

Nevertheless, in all 10 trials, the charging control policy GP_f2 yields a lower mean additional external charging time per day $\overline{A}$ in hours than the charging control policies CC_f1 and CC_f2. This also applies to the charging control policy GP_f1, which yields a mean additional external charging time per day $\overline{A}$ in hours per day that is even lower than the mean additional external charging time per day $\overline{A}$ of the charging control policy GP_f2 based on genetic programming. Thus, the charging control policy GP_f1 outperforms the charging control policy GP_f2 with regard to the mean additional external charging time intervals per day $\overline{A}$, as well as the combined charging control policies CC_f1, CC_f2, and the basic charging control policies ED, FCS LCF, LEF, and LSF.

Fig. 13 displays a comparison for experimental results for the maximum additional charging times $\hat{A}$ for different embodiments compared with basic charging control policies. In particular, fig. 13 illustrates distributions of maximum additional external charging time intervals per day $\hat{A}$ in hours for the different charging control policies generated using test data over ten trials.

The charging control policy GP_f2 using genetic programming yields a lower maximum additional charging time intervals per day $\hat{A}$ than the charging control policy GP_f1, and also outperforms the charging control policies CC_f1 and CC_f2 with regard to the maximum additional charging time $\hat{A}$ in hours per day.

The charging control policy using genetic programming is especially promising for improving the fairness of the executed charging processes of the charging system 1, as it yields a notable improvement in the maximum additional charging time intervals per day $\hat{A}$ compared to the single basic charging control policies as well as compared to the combined charging control policies CC_f1 and CC_f2. Simultaneously, the combined charging control policy still yields a good mean additional charging time interval per day $\overline{A}$.

Fig. 14 illustrates a simple tree structure representing a genetic programming model (GP model). A GP model is a combination of variables, constants and operators. The set of variables and the set of operators, which can be combined in the GP model are predefined. The set of constants may also be predefined. Alternatively, set of constants is evolved while performing the genetic programming approach. In the illustrated example of a simplified GP model according to fig. 14, the expression $\cdot X1 + 2 \cdot X2$, is represented as the tree shown in the figure. The expression includes a set of variables comprising the variables $X1$ and $X2$, and the sum operator "+" in the set of operators.

Genetic programming refers to a specific type of evolutionary algorithm, which evolves programs, expressions or formulas. Running a genetic programming algorithm provides a white-box model, which can be considered to be easier to interpret and to explain than, e.g. neural networks, or similar black-box machine learning models.

The problem of charging electric vehicles by charging system is formulated as an optimization problem with two objectives. The embodiment uses a genetic programming-based approach to learn such a GP model with the goal to achieve a high performance when charging electric vehicles by the charging system with respect to the two objectives.

All steps which are performed by the various entities described in the present disclosure as well as the functionalities described to be performed by the various entities are intended to mean that the respective entity is adapted to or configured to perform the respective steps and functionalities.

In the claims as well as in the description the word "comprising" does not exclude the presence of other elements or steps.

The indefinite article "a" or "an" does not exclude a plurality.

A single element or other unit may fulfill the functions of several entities or items recited in the claims. The mere fact that different dependent claims recite certain measures and features of the control circuit does not exclude that a combination of these measures and features cannot combined in an advantageous implementation.

The features described in the discussion of specific embodiments and depicted in the figures may be combined with each other for the invention defined in the attached claims.

CITATION:

"Impact of priority criteria on electric vehicle charge scheduling" by Kandasamy Nandha Kumar et al, 2015. In: IEEE Transactions on Transportation Electrification, vol. 1, Nr. 3, October 2015, pages 200-210.

**Claims**

1. A method for controlling charging processes for charging electric vehicles (EV1, EV2, EV3, EV4) by a charging system (1),

   wherein the charging system (1) performs charging batteries of the electric vehicles (EV1, EV2, EV3, EV4) based on at least one charging control policy, and the method comprises
   determining (S2) information on the available total amount of energy for charging the batteries of the electric vehicles (EV1, EV2, EV3, EV4) for each time step;
   computing (S3), for each time step, ,
   a fraction of the total amount of energy for charging the batteries of the electric vehicles (EV1, EV2, EV3, EV4); and
   controlling charging (S4, S5), during each time step, the batteries of the electric vehicles (EV1, EV2, EV3, EV4) based on the at least one charging control policy and the computed fraction of total amount of energy .

2. The method according to claim 1, wherein the method comprises

   computing, for each time step, for each of the electric vehicles (EV1, EV2, EV3, EV4), a priority score based on features of the electric vehicles (EV1, EV2, EV3, EV4) using a formula determined by genetic programming,
   determining the fraction of the total amount of energy for charging the batteries of the electric vehicles (EV1, EV2, EV3, EV4) for each time step and for each of the electric vehicles (EV1, EV2, EV3, EV4) based on the computed priority scores.

3. The method according to claim 2, wherein

   the features of the electric vehicles (EV1, EV2, EV3, EV4) comprise at least one of an energy capacity of the battery ,
   a state-of-charge of the battery,
   an arrival time step,
   a maximum charging power of the electric vehicle,
   a state of charge at the arrival of the electric vehicle, and
   a charged-energy-since-arrival divided by a number-of-time-steps-since-arrival of each of the electric vehicles (EV1, EV2, EV3, EV4).

4. The method according to claim 2 or 3, wherein the method comprises

   acquiring (S1) historical information on charging parameters and battery parameters from a database (8, 9); and
   determining the formula by applying a genetic programming algorithm on the acquired historical information in a training phase.

5. The method according to any one of claims 2 to 4, wherein

   determining the formula by the genetic programming includes
   a step of selecting for further processing, from candidate formulas, based on a predefined fitness measure,
   wherein the predefined fitness measure comprises at least one of a mean additional charging time of the electric vehicles (EV1, EV2, EV3, EV4), and a maximum additional charging time for the electric vehicles (EV1, EV2, EV3, EV4).

6. The method according to any one of claims 2 to 5, wherein
   controlling charging the batteries of the electric vehicles (EV1, EV2, EV3, EV4) includes prioritizing at least a first electric vehicle (EV1, EV2, EV3, EV4) of the electric vehicles (EV1, EV2, EV3, EV4) over at least one second electric vehicle (EV1, EV2, EV3, EV4) of the electric vehicles (EV1, EV2, EV3, EV4) based on the computed priority score.

7. The method according to claim 1,

   wherein the charging system (1) performs charging the batteries of the electric vehicles (EV1, EV2, EV3, EV4) based on a plurality of charging control policies; and
   the method further comprises acquiring (S1) historical information on charging parameters and battery parameters from a database (8, 9);
computing (S3), for each time step, and for each charging control policy of the plurality of charging control policies, based on the historical information,
the fraction of the total amount of energy for charging the batteries of the electric vehicles (EV1, EV2, EV3, EV4) with the charging control policy; and
controlling charging (S4, S5), simultaneously, during each time step, the batteries of the electric vehicles (EV1, EV2, EV3, EV4) based on a combination of the plurality of charging control policies and the computed fraction of energy for each charging control policy.

8. The method according to claim 7, wherein
a sum of the computed fractions of the total amount of energy corresponds to the total amount of energy.

9. The method according to claim 7 or 8, wherein
computing the fractions includes optimizing the fractions based on minimizing a mean additional charging time of the electric vehicles (EV1, EV2, EV3, EV4), and minimizing a maximum additional charging time for all electric vehicles (EV1, EV2, EV3, EV4).

10. The method according to claim 9, wherein the method comprises
optimizing the fractions based on the acquired historical information for a predetermined period of time.

11. The method according to claim 9 or 10, wherein the method comprises

optimizing the fractions by performing a multi-objective optimization including the objectives

$$f1 = \min_{w_{chp_k}, k=1,\ldots K} \bar{A},$$

and

$$f2 = \min_{w_{chp_k}, k=1,\ldots K} \hat{A},$$

with $\bar{A}$ representing a mean additional charging time over all electric vehicles (EV1, EV2, EV3, EV4), $\hat{A}$ representing a maximum additional charging time of all electric vehicles (EV1, EV2, EV3, EV4), a number of $K$ charging control policies $chp_k$, and $w_{chpk}$ representing a weight of the charging control policy $chp_k$, and selecting a solution from a Pareto set resulting from the optimization.

12. The method according to any one of claims 7 to 11, wherein
obtaining from charging equipment (6) of the charging system (1) information on charging characteristics and battery characteristics of the electric vehicles (EV1, EV2, EV3, EV4) for generating the historic information on charging parameters and battery parameters, and storing the obtained information in the database (8, 9).

13. The method according to any one of claims 7 to 12, wherein the method includes
acquiring from the electric vehicles (EV1, EV2, EV3, EV4) information on charging characteristics and battery characteristics of the electric vehicles (EV1, EV2, EV3, EV4) for generating the historic information on charging parameters and battery parameters, and storing the acquired information in the database (8, 9).

14. The method according to any one of claims 7 to 12, wherein the method includes
acquiring, via a user interface (10) from users of the electric vehicles (EV1, EV2, EV3, EV4), information on usage of the electric vehicles (EV1, EV2, EV3, EV4) for generating the historic information on charging parameters and battery parameters, and storing the acquired information in the database (8, 9).

15. The method according to any one of claims 7 to 14, wherein
the plurality of charging control policies includes different charging control policies from at least an equal distribution policy, a first-come-first-served policy, a less-energy-first policy, a lower-state-of-charge-first policy, a less-charged-first policy.

16. A computer program comprising instructions, which, when the program is executed by a computer (7, 8), cause the computer (7, 8) to carry out the method of any one of the preceding claims.

17. A charging control system for controlling charging of electric vehicles (EV1, EV2, EV3, EV4),
wherein the charging control system is configured to perform charging batteries of the electric vehicles (EV1, EV2, EV3, EV4) based on at least one charging control policy, and
the charging control system comprises

a control circuit (7) configured to determine information on an available total amount of energy for each time step for charging batteries of the electric vehicles (EV1, EV2, EV3, EV4), and
to compute, for each time step,
a fraction of the total amount of energy for charging the batteries of the electric vehicles (EV1, EV2, EV3, EV4); and
to generate a control signal for controlling charging, during each time step, the batteries of the electric vehicles (EV1, EV2, EV3, EV4) with electric energy based on the at least one charging control policy and the computed fraction of the total amount of energy, and
to output, via a charging control interface (7.2) of the control circuit (7), the generated control signal to charging equipment (6) of a charging system (1).

18. The charging control system according to claim 17, wherein

the control circuit (7) is further configured to compute, for each time step, for each of the electric vehicles (EV1, EV2, EV3, EV4), a priority score based on features of the electric vehicles (EV1, EV2, EV3, EV4) using a formula determined by genetic programming, and
to determine the fraction of the total amount of energy for charging the batteries of the electric vehicles (EV1, EV2, EV3, EV4) for each time step and for each of the electric vehicles (EV1, EV2, EV3, EV4) based on the computed priority scores.19. The charging control system according claim 17, wherein the charging control system performs charging the batteries of the electric vehicles (EV1, EV2, EV3, EV4) based on a plurality of charging control policies, and the charging control system comprises
a data interface (7.1) configured to acquire historical information on charging and battery parameters of the electric vehicles (EV1, EV2, EV3, EV4) from a database; and
a memory (8, 9) for storing the database; and
the control circuit (7) is further configured to compute, for each time step, and for each charging control policy of the plurality of charging control policies, based on the historical information,
the fraction of the total amount of energy for charging the batteries of the electric vehicles (EV1, EV2, EV3, EV4) with the charging control policy; and
to generate the control signal for controlling simultaneously charging, during each time step, the batteries of the electric vehicles (EV1, EV2, EV3, EV4) with electric energy based on a combination of the plurality of charging control policies and the computed fraction of the total amount of energy for each charging control policy.

FIG.1

**FIG. 2**

| MODEL | $P^{max}$ (AC) | C | $P^{model}$ |
|---|---|---|---|
| A | 22 kW | 41 kWh | 0.33 |
| B | 7.2 kW | 40 kWh | 0.19 |
| C | 11kW | 49 kWh | 0.17 |
| D | 11 kW | 58 kWh | 0.16 |
| E | 11 kW | 64 kW | 0.17 |

**FIG. 3**

FIG. 4A

FIG. 4B

ED: EQUAL DISTRIBUTION          FCFS: FIRST COME FIRST SERVED
LCF: LESS CHARGED FIRST          LEF: LOWER ENERGY FIRST
LSF: LOWER SOC FIRST

FIG. 5

FIG. 6A

FIG. 6B

FIG. 7A

FIG. 7B

BP_f1 (BEST) BASIC POLICY      BP_f2 (BEST) BASIC POLICY
CC_f1 COMBINED CONTROL      CC_f2 COMBINED CONTROL
ED: EQUAL DISTRIBUTION      FCFS: FIRST COME FIRST SERVED
LCF: LESS CHARGED FIRST      LEF: LOWER ENERGY FIRST
LSF: LOWER SOC FIRST

START

AQUIRING INFORMATION ON
CURRENT SYSTEM STATE — S81

DETERMINING AVAILABLE TOTAL
AMOUNT OF ENERGY — S2

COMPUTING PRIORITY SCORE FOR
EACH ELECTRIC VEHICLE AND EACH
TIME INTERVAL — S83

GENERATING CONTROL SIGNAL — S4

CONTROLLING CHARGING ELECTRIC
VEHICLES BASED ON THE CONTROL
SIGNAL — S5

END

FIG. 8

FIG. 9

FIG. 10

FIG. 11

FIG. 12

FIG. 13

CC_f1 COMBINED CONTROL          CC_f2 COMBINED CONTROL
ED: EQUAL DISTRIBUTION          FCFS: FIRST COME FIRST SERVED
GP_f1 GENETIC PROGRAMMING       GP_f2 GENETIC PROGRAMMING
LCF: LESS CHARGED FIRST         LEF: LOWER ENERGY FIRST
LSF: LOWER SOC FIRST

FIG. 14

**EUROPEAN SEARCH REPORT**

Application Number

EP 25 17 7527

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 114 307 A (SHENZHEN DAOTONG HECHUANG DIGITAL ENERGY CO LTD) 24 November 2023 (2023-11-24) * paragraph [0090] * * paragraph [0122] * * paragraph [0183] * * paragraph [0199] - paragraph [0200] * * paragraph [0207] - paragraph [0214] * * paragraph [0219] * * paragraph [0247] * * paragraph [0255] - paragraph [0264] * * paragraph [0275] * * figure 1 * ----- | 1-18 | INV. B60L53/62 B60L53/68 |
| A | EP 4 000 996 A1 (VITO NV [BE]; UNIV LEUVEN KATH [BE]) 25 May 2022 (2022-05-25) * the whole document * ----- | 1-18 | |
| A | US 2013/054045 A1 (RAMEZANI MARYAM [DE] ET AL) 28 February 2013 (2013-02-28) * the whole document * ----- | 1-18 | TECHNICAL FIELDS SEARCHED (IPC) B60L |

The present search report has been drawn up for all claims

| Place of search | Date of completion of the search | Examiner |
|---|---|---|
| The Hague | 10 October 2025 | Marín Saldaña, I |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 7527

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | Publication date | Patent family member(s) | | Publication date |
|---|---|---|---|---|---|
| CN 117114307 | A | 24-11-2023 | CN | 117114307 A | 24-11-2023 |
| | | | WO | 2025036267 A1 | 20-02-2025 |
| EP 4000996 | A1 | 25-05-2022 | EP | 4000996 A1 | 25-05-2022 |
| | | | EP | 4251464 A1 | 04-10-2023 |
| | | | WO | 2022112226 A1 | 02-06-2022 |
| US 2013054045 | A1 | 28-02-2013 | CN | 103034776 A | 10-04-2013 |
| | | | EP | 2572924 A2 | 27-03-2013 |
| | | | US | 2013054045 A1 | 28-02-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. DEB** ; **A. PRATAP, S. AGARWAL** ; **T. MEYAR-IVAN**. A fast and elitist multiobjective genetic algorithm: NSGA-II. *IEEE Trans. on Evolutionary Computation*, 2002, vol. 6 (2), 182-197
- **A.L. SØRENSEN** ; **K. LINDBERG** ; **I. SARTORI** ; **I. ANDRESEN**. Analysis of residential EV energy flexibility potential based on real-world charging reports and smart meter data. *Energy and Buildings*, 2021, vol. 241, 110923
- **M. WEISS** ; **K. C. CLOOS** ; **E. HELMERS**. Energy efficiency trade-offs in small to large electric vehicles. *Environmental Sciences Europe*, 2020, vol. 32 (1), 1-17

- **G. YU** ; **Y. JIN** ; **M. OLHOFER**. A method for a posteriori identification of knee points based on solution density. *Proc. IEEE CEC*, 2018, 1-8
- **T. SCHMITT** ; **M. HOFFMANN** ; **T. RODEMANN** ; **J. ADAMY**. Incorporating human preferences in decision making for dynamic multi-objective optimization in model predictive control. *Inventions*, 2022, vol. 7 (3)
- **KANDASAMY NANDHA KUMAR et al.** Impact of priority criteria on electric vehicle charge scheduling. *IEEE Transactions on Transportation Electrification*, October 2015, vol. 1 (3), 200-210